(19) **Europäisches Patentamt / European Patent Office / Office européen des brevets**

(11)　**EP 3 266 813 B1**

(12)　# EUROPEAN PATENT SPECIFICATION

(45) Date of publication and mention
of the grant of the patent:
**18.09.2019　Bulletin 2019/38**

(21) Application number: **16758688.2**

(22) Date of filing: **28.01.2016**

(51) Int Cl.:
*B32B 27/00* (2006.01)　　*B32B 27/36* (2006.01)
*C08K 7/00* (2006.01)　　*C08L 67/00* (2006.01)
*C09J 7/20* (2018.01)　　*C08J 5/18* (2006.01)
*C08K 7/04* (2006.01)　　*B32B 27/20* (2006.01)
*B29C 71/02* (2006.01)　　*B29B 13/06* (2006.01)
*B29K 105/16* (2006.01)　　*B29C 55/00* (2006.01)
*B29K 509/02* (2006.01)　　*C08J 3/20* (2006.01)
*C08K 3/22* (2006.01)　　*C08K 3/34* (2006.01)
*C08K 3/38* (2006.01)　　*B29D 7/01* (2006.01)
*B29C 48/08* (2019.01)　　*B29C 48/88* (2019.01)

(86) International application number:
**PCT/JP2016/052522**

(87) International publication number:
**WO 2016/139992 (09.09.2016 Gazette 2016/36)**

(54) **POLYESTER FILM AND ELECTRICAL INSULATION SHEET MANUFACTURED USING SAME, WIND POWER GENERATOR, AND ADHESIVE TAPE**

POLYESTERFOLIE UND DAMIT HERGESTELLTE ELEKTROISOLIERUNGSPLATTE, WINDKRAFTGENERATOR UND KLEBEBAND

FILM POLYESTER ET FEUILLE D'ISOLATION ÉLECTRIQUE FABRIQUÉE À L'AIDE DE CELUI-CI, GÉNÉRATEUR D'ÉNERGIE ÉOLIENNE, ET RUBAN ADHÉSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:　**05.03.2015　JP 2015043274
30.07.2015　JP 2015150354
02.09.2015　JP 2015172504**

(43) Date of publication of application:
**10.01.2018　Bulletin 2018/02**

(73) Proprietor: **Toray Industries, Inc.**
**Tokyo 103-8666 (JP)**

(72) Inventors:
• **YOSHIDA, Shohei**
**Otsu-shi**
**Shiga 520-8558 (JP)**

• **HAMASAKI, Risa**
**Otsu-shi**
**Shiga 520-8558 (JP)**
• **AOYAMA, Shigeru**
**Otsu-shi**
**Shiga 520-8558 (JP)**
• **SAKAMOTO, Jun**
**Mishima-shi**
**Shizuoka 411-8652 (JP)**

(74) Representative: **Kador & Partner PartG mbB**
**Corneliusstraße 15**
**80469 München (DE)**

(56) References cited:
EP-A1- 1 199 333　　EP-A1- 2 535 386
JP-A- H06 128 466　　JP-A- H08 504 469
JP-A- 2003 041 019　　JP-A- 2006 001 992
JP-A- 2011 026 500　　JP-A- 2013 038 179

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a polyester film. The present invention also relates to an electrical insulation sheet, a wind power generator, and adhesive tape containing the film.

BACKGROUND ART

Polyester resins (in particular, poly(ethylene terephthalate), poly(ethylene-2,6-naphthalenedicarboxylate), etc.) are excellent in mechanical properties, thermal properties, chemical resistance, electrical properties, and formability and therefore used in various applications. Films made of the polyester resins (called polyester films), in particular, biaxially oriented polyester films are excellent in mechanical properties, electrical properties, etc. and therefore used in electrical insulating materials, such as copper-clad laminates, solar-cell back sheets, adhesive tape, flexible printed boards, membrane switches, heating element sheets, flat cables, and motor insulating materials, as well as in magnetic recording materials, capacitor materials, packaging materials, automobile materials, building materials, and various other industrial materials for applications such as photographing, graphics, and thermal transfer.

Electrical insulating materials for motors and other uses (such as insulating sheets for wind power generation, sheets for hybrid motors, and sheets for motors in air conditioners), among these, have the following problem: as motors are becoming smaller with higher density, for example, heat that is generated during power generation and during use accumulates and causes a rise in temperature, which results in a decrease in power generation efficiency and an increase in power consumption. Solar-cell back sheet materials, for example, have the same problem that heat that is generated during power generation accumulates and causes a rise in temperature to lead to a decrease in power generation efficiency. For these reasons, it has been important to transfer and dissipate internal heat to outside. In addition, electrical insulating materials for use in electronic components (such as adhesive tape, flexible printed boards, and membrane switches for electronic components) have problems like the following one: along with the recent trend of electronic components toward high performance, smaller sizes, and enhanced integration, the amount of heat generated from various electronic components has become greater and been causing a decrease in processing speed and an increase in power consumption. For this reason, it has been important to release internal heat to outside through the cabinet.

Under these circumstances, films having excellent thermal conductivity are demanded and various materials have been proposed. For example, a composite film produced by using a graphite sheet, which has excellent thermal conductivity, and then laminating a PET film as a protective layer to one side or both sides of the graphite sheet (Patent Document 1) and a film composed of a biaxially stretched PET film containing fibrous carbon material (Patent Documents 2 and 3) are proposed.

Patent Document 4 discloses a film comprising a thermoplastic resin (A) and 10-90 wt.% of plate-like inert particles (Pa) having a primary aspect ratio of 5-200, and the plate-like inert particles (Pa) include secondary particles having an average thickness D2 not greater than five times of the average thickness D1 of the primary particles. The film has an area ratio of voids in the film of 0% to 5%.

A resin composition containing crystalline polyimide is disclosed in Patent Document 5. The resin composition comprises a mixture produced by blending a crystalline polyimide with a thermoplastic polyester. The resin composition has excellent mechanical characteristics in terms of high elastic modulus, flow properties and heat resistance.

PRIOR ART DOCUMENTS

PATENT DOCUMENTS

Patent Document 1: JP 2008-80672 A
Patent Document 2: JP 2013-28753 A
Patent Document 3: JP 2013-38179 A
Patent Document 4: JP 2003 041019 A
Patent Document 5: EP 1 199 333 A1

SUMMARY OF THE INVENTION

PROBLEMS TO BE SOLVED BY THE INVENTION

However, the technique of Patent Document 1 has such problems that the graphite sheet is brittle and poor in mechanical properties, the thermal conductive rate of the PET film as the protective layer is low and not enough for allowing the graphite film to fully display its excellent thermal conductive rate, and the composite film is thick. The techniques of Patent Documents 2 and 3 also have problems that the film is conductive and therefore not suitable for applications where insulation is required, such as in motor insulating materials, solar-cell back sheets, and electronic components.

Thus, an object of the present invention is to provide a polyester film excellent in electrical insulating properties, thermal conductivity, and mechanical properties.

SOLUTIONS TO THE PROBLEMS

For attaining the object described above, the present invention subsumes the following embodiments.

(1) A polyester film provided with a layer (a P layer) that contains a crystalline polyester (A) and also contains plate-like particles (b1) each having an aspect ratio of 2 or more and/or needle-like particles (b2) each having an aspect ratio of 2 or more, wherein the plate-like particle (b1) having an aspect ratio of 2 or more and the needle-like particle (b2) having an aspect ratio of 2 or more are collectively called particle (B), wherein the crystalline polyester (A) is a polyester containing a dicarboxylic acid constituent and a diol constituent as main constituents, and is also a resin having a $\Delta$**Hm** value (amount of heat for crystal melting) of not lower than 15 J/g, the P layer is stretched in at least one axial direction and the Young's modulus of the polyester film is 2 GPa or more and the values of Wb and V/ Wb are 10 or more and 1 or less, respectively, wherein Wb (% by mass) represents the total content of the plate-like particles (b1) each having an aspect ratio of 2 or more and the needle-like particles (b2) each having an aspect ratio of 2 or more in the P layer, and V (% by volume) represents the porosity in the P layer, wherein the plate-like particle (b1) having an aspect ratio of 2 or more and the needle-like particle (b2) having an aspect ratio of 2 or more have on their surfaces a substituent reactive with the crystalline polyester (A) (hereinafter, the substituent is called reactive substituent (a)), and the amount of the reactive substituent (a) on a unit surface area of the particle (B) is not smaller than 0.2 x 10-6 mol/m2 and not greater than 1.4 x 10-4 mol/m2.

(2) The polyester film according to (1), in which the P layer contains both the plate-like particle (b1) having an aspect ratio of 2 or more and the needle-like particle (b2) having an aspect ratio of 2 or more, and a Wb2/Wb1 value is not smaller than 0.7 and not greater than 9, with the content of the plate-like particle (b1) having an aspect ratio of 2 or more in the P layer being Wb1 (% by mass) and the content of the needle-like particle (b2) having an aspect ratio of 2 or more in the P layer being Wb2 (% by mass).

(3) The polyester film according to any one of (1) to (2), in which the elongation at break of the polyester film is not lower than 10%.

(4) The polyester film according to any one of (1) to (3), in which the difference ($\Delta$Tcg) between the glass transition temperature (Tg) of the P layer and the cold crystallization peak top temperature (Tcc) of the P layer is not lower than 44°C.

(5) The polyester film according to (1) to (4), in which a dynamic storage elastic modulus (E') at 100°C determined by dynamic viscoelasticity measurement (hereinafter, called DMA) at a frequency of 1 Hz is not smaller than 5 $\times$ $10^7$ Pa.

(6) The polyester film according to any one of (1) to (5), in which the polyester film has a thermal conductive rate in a film thickness direction of not lower than 0.15 W/mK and a surface specific resistance of not lower than $10^{13}$ Ω/□.

(7) An electrical insulation sheet having the polyester film as described in any one of (1) to (6).

(8) A wind power generator having the electrical insulation sheet as described in (7).

(9) Adhesive tape having the polyester film as described in any one of (1) to (6).

(10) A method for producing the polyester film as described in any one of (1) to (6), the method including, in sequence:

melt-kneading the crystalline polyester (A) with at least one of the plate-like particle (b1) having an aspect ratio of 2 or more and having the substituent reactive with the crystalline polyester (A) (hereinafter, the substituent is called reactive substituent (a)) on the surface and the needle-like particle (b2) having an aspect ratio of 2 or more and having the reactive substituent (a) on the surface, wherein the plate-like particle (b1) having an aspect ratio of 2 or more and the needle-like particle (b2) having an aspect ratio of 2 or more are collectively called particle (B) (hereinafter, the step is called melt-kneading step);

melting the resulting resin composition containing the crystalline polyester (A) and the at least one particle and

3

discharging the resulting resin composition through a nozzle to obtain a film (hereinafter, the step is called melt-extruding step); and

biaxially stretching the resulting film (hereinafter, the step is called stretching step).

(11) The method for producing the polyester film according to (10), in which the amount of the reactive substituent (a) on a unit surface area of the at least one of the plate-like particle (b1) having an aspect ratio of 2 or more and the needle-like particle (b2) having an aspect ratio of 2 or more is not smaller than $0.2 \times 10^{-6}$ mol/m$^2$ and not greater than $1.4 \times 10^{-4}$ mol/m$^2$.

(12) The method for producing the polyester film according to (10) or (11) in which the at least one of the plate-like particle (b1) having an aspect ratio of 2 or more and the needle-like particle (b2) having an aspect ratio of 2 or more has been treated with a surface-treating agent containing the reactive substituent (a), and the proportion (by mass) of the surface-treating agent is not lower than 0.1 parts by mass and not higher than 5 parts by mass relative to the mass of the particle (B) being defined as 100 parts by mass.

(13) The method for producing the polyester film according to any one of (10) to (12), in which the melt-kneading step yields a chip-like composition, then the resulting chip-like composition is subjected to solid-phase polymerization, and then the resultant is melted and subjected to film formation in the melt-extruding step.

## EFFECTS OF THE INVENTION

The present invention can provide a polyester film that is excellent in electrical insulating properties, thermal conductivity, and mechanical properties compared to conventional polyester films. The polyester film of the present invention can be suitably used in applications where electrical insulating properties and thermal conductivity are both important, namely, applications including electrical insulating materials such as copper-clad laminates, solar-cell back sheets, adhesive tape, flexible printed boards, membrane switches, heating element sheets, and flat cables as well as capacitor materials, automobile materials, and building materials. More specifically, the polyester film of the present invention can be used to provide highly efficient wind power generators and solar cells and low-power-consuming small electronic devices.

## BRIEF DESCRIPTION OF THE DRAWING

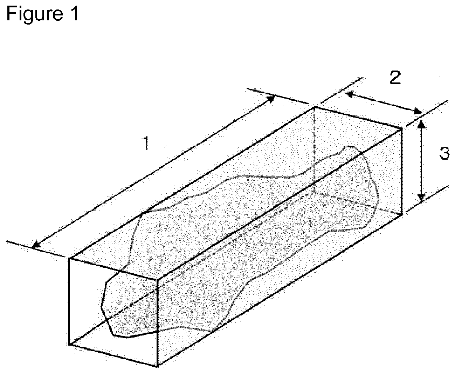

Fig. 1 schematically illustrates a particle enclosed in a circumscribing rectangular parallelepiped.

## EMBODIMENTS OF THE INVENTION

A polyester film of the present invention needs to have a layer (P layer) that contains a crystalline polyester (A) and at least one of a plate-like particle (b1) having an aspect ratio of 2 or more and a needle-like particle (b2) having an aspect ratio of 2 or more (hereinafter, the plate-like particle (b1) having an aspect ratio of 2 or more and the needle-like particle (b2) having an aspect ratio of 2 or more are sometimes collectively called particle (B)).

The crystalline polyester (A) in the polyester film of the present invention is a polyester containing a dicarboxylic acid constituent and a diol constituent as main constituents, and is also a resin having a ΔHm value (amount of heat for crystal melting) of not lower than 15 J/g. The ΔHm value is determined as follows: the resin is heated from 25°C to 300°C at a temperature raising rate of 20°C/minute (1st RUN), then maintained for 5 minutes, then rapidly cooled to a temperature of not higher than 25°C, and then reheated from room temperature to 300°C at a temperature raising rate of 20°C/min (2nd RUN), in accordance with JIS K-7122 (1987); and in a differential scanning calorimetry chart obtained for the 2nd RUN, the peak area in a melting peak is used to determine the ΔHm value. The ΔHm value (amount of heat for crystal melting) of the resin is more preferably not lower than 20 J/g, further preferably not lower than 25 J/g, particularly preferably not lower than 30 J/g. In the case in which the polyester constituting the P layer is the crystalline polyester (A), it is easy to perform orientation and crystallization in a production method described below and a highly heat-resistant film can be obtained. In the present specification, a constituent refers to the smallest unit possibly obtained by hydrolysis of the polyester.

Non-limiting examples of the dicarboxylic acid constituent of the polyester include aliphatic dicarboxylic acids such as malonic acid, succinic acid, glutaric acid, adipic acid, suberic acid, sebacic acid, dodecanedioic acid, dimer acids, eicosanedioic acid, pimelic acid, azelaic acid, methylmalonic acid, and ethylmalonic acid, alicyclic dicarboxylic acids such as adamantane dicarboxylic acid, norbornene dicarboxylic acid, isosorbide, cyclohexane dicarboxylic acid, and decalindicarboxylic acid, aromatic dicarboxylic acids such as terephthalic acid, isophthalic acid, phthalic acid, 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyldicarboxylic acid, 4,4'-diphenyl ether dicarboxylic acid, 5-sulfoisophthalic acid sodium salt, anthracene dicarboxylic acid, phenanthrene dicarboxylic acid, and 9,9'-bis(4-carboxyphenyl)fluorene acid, and ester derivatives thereof. Also preferable are, for example, these carboxylic acid constituents having a terminal carboxy group to which oxyacids such as l-lactide, d-lactide, and hydroxybenzoic acid, derivatives thereof, or several oxyacids linked to each other are added. One of these carboxylic acid constituents may be used alone, or a plurality of these carboxylic acid constituents may be used together as needed.

Non-limiting examples of the diol constituent of the polyester include diols, for example, aliphatic diols such as ethylene glycol, 1,2-propanediol, 1,3-propanediol, 1,4-butanediol, 1,2-butanediol, and 1,3-butanediol, alicyclic diols such as cyclohexanedimethanol, spiroglycol, and isosorbide, bisphenol A, 1,3-benzenedimethanol, 1,4-benzenedimethanol, 9,9'-bis(4-hydroxyphenyl) fluorene, and aromatic diols. The diol constituent may also be several of these diols linked to each other. One of these diol constituents may be used alone, or a plurality of these diol constituents may be used together as needed.

In the crystalline polyester (A) in the P layer of the polyester film of the present invention, the proportion of the amount of an aromatic dicarboxylic acid constituent in the total amount of the dicarboxylic acid constituent is preferably not lower than 90 mol% and not higher than 100 mol%, more preferably not lower than 95 mol% and not higher than 100 mol%, further preferably not lower than 98 mol% and not higher than 100 mol%, particularly preferably not lower than 99 mol% and not higher than 100 mol%. Most preferably, the proportion is 100 mol%, in other words, the dicarboxylic acid constituent is exclusively an aromatic carboxylic acid constituent. In the case in which the proportion is lower than 90 mol%, heat resistance may be low. In the case in which the proportion of the amount of an aromatic dicarboxylic acid constituent in the total amount of the dicarboxylic acid constituent in the crystalline polyester (A) in the P layer of the polyester film of the present invention is not lower than 90 mol% and not higher than 100 mol%, it is easy to perform orientation and crystallization in the production method described below and the resulting polyester film can be highly heat-resistant.

A repeating unit forming the crystalline polyester (A) in the P layer of the polyester film of the present invention, more specifically, a main repeating unit consisting of the dicarboxylic acid constituent and the diol constituent suitably has and preferably is ethylene terephthalate, ethylene-2,6-naphthalenedicarboxylate, propylene terephthalate, butylene terephthalate, 1,4-cyclohexylenedimethylene terephthalate, and/or ethylene-2,6-naphthalenedicarboxylate. The main repeating unit herein refers to a repeating unit the total amount of which accounts to not lower than 80 mol%, more preferably not lower than 90 mol%, further preferably not lower than 95 mol% of the total amount of repeating units.

From the viewpoints of low cost, easy polymerization, and excellent heat resistance, it is further preferable that the main repeating unit be ethylene terephthalate and/or ethylene-2,6-naphthalenedicarboxylate. In the case in which the main repeating unit is ethylene terephthalate, the resulting film can be versatile, excellent in heat resistance, and obtainable at low cost. In the case in which the main repeating unit is ethylene-2,6-naphthalenedicarboxylate, the resulting film can be even more excellent in heat resistance.

Although the crystalline polyester (A) in the P layer of the polyester film of the present invention can be obtained by appropriately combining the constituents (the dicarboxylic acid constituent and the diol constituent) and subjecting these constituents to polycondensation, it is also preferable that the crystalline polyester be obtained by copolymerizing these constituents with, for example, an additional constituent having three or more carboxy groups and/or hydroxy groups. In the latter case, the proportion of the additional constituent having three or more carboxy groups and/or hydroxy groups in all the constituents of the crystalline polyester (A) subjected to copolymerization is preferably not lower than 0.005 mol% and not higher than 2.5 mol%.

An intrinsic viscosity (hereinafter, called IV) of the crystalline polyester (A) in the P layer of the polyester film of the present invention is preferably not lower than 0.6, more preferably not lower than 0.65, further preferably not lower than 0.68, particularly preferably not lower than 0.7. In the case in which the IV value is too low, the degree of intermolecular entanglement with the particle (B) (described below) is too low, potentially resulting in no mechanical physical properties obtained, or potentially resulting in a tendency toward an over-time decrease in mechanical properties to cause embrittlement. In the case in which the IV value of the crystalline polyester in the P layer of the polyester film of the present invention is not lower than 0.6, excellent mechanical properties can be obtained. The upper limit to the IV value is not particularly set. However, a too high IV value may lead to a long polymerization time, which is disadvantageous in terms of cost, or may lead to difficult melt-extrusion. Thus, the IV value is preferably not higher than 1.0, further preferably not higher than 0.9.

To obtain the polyester having the IV value specified above, the following methods can be employed: melt-polymerization to obtain a certain melt viscosity as determined in advance, followed by discharging, strand forming, and cutting so as to form chips having the IV value specified above; and formation of chips having an intrinsic viscosity lower than the desired value, followed by solid-phase polymerization so as to obtain the polyester having the IV value specified above. It is preferable to perform formation of chips having an intrinsic viscosity lower than the desired value followed by solid-phase polymerization, among these methods, because this method can reduce thermal degradation and also reduce the number of terminal carboxy groups particularly in the case where the IV value is to be made not lower than 0.65. For further enhancing the IV value of the film, it is more preferable to perform the method described below in which the crystalline polyester (A) containing the particle (B) is subjected to solid-phase polymerization. In this case, excessive crystallization is inhibited during film formation by the production method described below in which the crystalline polyester (A) contains the particle (B), resulting in enhanced stretchability and enhanced mechanical properties of the resulting film.

A melting point (Tm) of the crystalline polyester (A) in the P layer of the polyester film of the present invention is preferably not lower than 240°C and not higher than 290°C. The melting point (Tm) herein is a melting point (Tm) measured by DSC while the temperature is being raised (at a temperature raising rate of 20°C/min). The melting point (Tm) of the crystalline polyester (A) is determined as follows: heating is performed from 25°C to a temperature 50°C higher than the melting point of the polyester at a temperature raising rate of 20°C/minute (1st RUN), then maintained for 5 minutes, then rapidly cooled to a temperature of not higher than 25°C, and then reheated from room temperature to 300°C at a temperature raising rate of 20°C/min (2nd RUN), by a method in accordance with JIS K-7121 (1987); and the temperature at the top of the crystal melting peak obtained for the 2nd RUN is used as the melting point (Tm) of the crystalline polyester (A). The melting point (Tm) is more preferably not lower than 245°C and not higher than 275°C, further preferably not lower than 250°C and not higher than 265°C. A melting point (Tm) lower than 240°C is unpreferable because the heat resistance of the film may be low, and a melting point (Tm) higher than 290°C is also unpreferable because it may be difficult to perform extrusion processing. In the case in which the melting point (Tm) of the crystalline polyester (A) in the P layer of the polyester film of the present invention is not lower than 245°C and not higher than 290°C, the resulting polyester film can be heat-resistant.

The number of terminal carboxy groups in the crystalline polyester (A) in the P layer of the polyester film of the present invention is preferably not greater than 40 equivalents/t, more preferably not greater than 30 equivalents/t, further preferably not greater than 20 equivalents/t. In the case in which the number of terminal carboxy groups is too great, catalytic action of protons derived from terminal carboxy groups is strong even after structure control, whereby hydrolysis and thermal decomposition are promoted and then degradation of the polyester film tends to proceed more than in a typical case. In the case in which the number of terminal carboxy groups is within the range described above, degradation (such as hydrolysis and thermal decomposition) of the polyester film can be reduced. The number of terminal carboxy groups can be controlled to not greater than 40 equivalents/t by using a polyester obtained by a combination of the following methods, for example: 1) esterification reaction of the dicarboxylic acid constituent and the diol constituent, then melt polymerization to obtain a certain melt viscosity as determined in advance, followed by discharging, strand forming, and cutting so as to form chips, further followed by solid-phase polymerization; and 2) addition of a buffer after the completion of transesterification reaction or esterification reaction and before an early stage of polycondensation reaction (namely, while the intrinsic viscosity is lower than 0.3). Alternatively, the number of terminal carboxy groups can be controlled by adding a buffer and/or a terminus-blocking agent during formation. The terminus-blocking agent is a compound that reacts with and binds to a terminal carboxy group or a terminal hydroxy group of the polyester and inhibits the catalytic activity of protons derived from the terminal group. Specific examples of the terminus-blocking agent include compounds containing a substituent such as an oxazoline group, an epoxy group, a carbodiimide group, and/or an isocyanate group. In the case in which an anti-hydrolysis agent is used, the amount of the anti-hydrolysis agent is preferably not lower than 0.01 mass%, more preferably not lower than 0.1 mass%, relative to the amount of the P layer. In the case in which the anti-hydrolysis agent is added in combination with the polyester, degradation of the polyester attributed to addition of the particle can be reduced and mechanical properties and heat resistance can be further enhanced. If the amount of the anti-hydrolysis agent is too great, flame retardancy may be reduced. Therefore, the upper limit to the amount of the anti-hydrolysis agent is preferably not greater than 2 mass%, more preferably not greater than 1 mass%, further preferably not greater than 0.8% mass%, relative to the amount of the P layer.

The P layer of the polyester film of the present invention needs to contain at least one of the plate-like particle (b1) having an aspect ratio of 2 or more and the needle-like particle (b2) having an aspect ratio of 2 or more (hereinafter, the plate-like particle (b1) having an aspect ratio of 2 or more and the needle-like particle (b2) having an aspect ratio of 2 or more are sometimes collectively called particle (B)) . The plate-like particle (b1) having an aspect ratio of 2 or more herein is a particle that when a primary particle thereof is circumscribed in a hypothetical rectangular parallelepiped as shown in Fig. 1 with the longest side being regarded as equivalent to the length (l) of the particle, the shortest side being regarded as equivalent to the thickness (t) of the particle, and the remaining side being regarded as equivalent to the width (b) of the particle, the ratio (l/t) of the length (l) to the thickness (t) is not lower than 2 and the ratio (l/b) of the length (l) to the width (b) is not lower than 1 and not higher than 2. The needle-like particle (b2) having an aspect ratio of 2 or more herein is a particle that when a primary particle thereof is circumscribed in a hypothetical rectangular parallelepiped as shown in Fig. 1 with the longest side being regarded as equivalent to the length (l) of the particle, the shortest side being regarded as equivalent to the thickness (t) of the particle, and the remaining side being regarded as equivalent to the width (b) of the particle, the ratio (l/t) of the length (l) to the thickness (t) is not lower than 2 and the ratio (l/b) of the length (l) to the width (b) is higher than 2. The aspect ratio herein is the ratio (l/t) of the length (l) to the thickness (t) of the plate-like particle or the needle-like particle. In the case in which the polyester film contains the plate-like particle or the needle-like particle having an aspect ratio of 2 or more, the probability at which particles come into contact with each other is higher than the case in which the polyester film contains a spherical particle instead. The probability at which particles come into contact with each other increases with the aspect ratio. In the case in which the total content (Wb) of the plate-like particle (b1) having an aspect ratio of 2 or more and the needle-like particle (b2) having an aspect ratio of 2 or more in the P layer of the polyester film of the present invention is not lower than 10 mass%, the resulting polyester film can be thermally conductive. The aspect ratio is more preferably not lower than 3, further preferably not lower than 5. The upper limit to the aspect ratio is not particularly limited, but is preferably not higher than 40, further preferably not higher than 30, for preventing breakage or cracking of the particle (B) while the particle is kneaded into the resin.

The total content (Wb) (% by mass) of the plate-like particle (b1) having an aspect ratio of 2 or more and the needle-like particle (b2) having an aspect ratio of 2 or more in the P layer needs to be not lower than 10 mass%, more preferably not lower than 12 mass% and not higher than 50 mass%, further preferably not lower than 15 mass% and not higher than 40 mass%, particularly preferably not lower than 18 mass% and not higher than 35 mass% . In the case in which the total content is lower than 10 mass%, the probability at which particles come into contact with each other is low, resulting in a decrease in the thermal conductive rate. In the case in which the total content is higher than 50 mass%, the film-forming properties and the after-stretching mechanical properties of the resulting film are poor.

The length (l) of each of the plate-like particle (b1) and the needle-like particle (b2) in the polyester film of the present invention is preferably not smaller than 1 $\mu$m and not greater than 80 $\mu$m, more preferably not smaller than 2 $\mu$m and not greater than 40 $\mu$m, further preferably not smaller than 3 $\mu$m and not greater than 20 $\mu$m. In the case in which the length (l) is smaller than 1 $\mu$m, the area of the interface is too large and the thermal conductivity may be low. In the case in which the length (l) is greater than 80 $\mu$m, film-forming properties may be poor, in particular stretchability in a stretching step described below may decrease, resulting in low productivity. In the case in which the length of each of the plate-like particle (b1) and the needle-like particle (b2) in the polyester film of the present invention is not smaller than 1 $\mu$m and not greater than 80 $\mu$m, thermal conductivity and film-forming properties can be both obtained, which is preferable.

Examples of the material of each of the plate-like particle (b1) and the needle-like particle (b2) in the polyester film of the present invention include metals such as gold, silver, copper, platinum, palladium, rhenium, vanadium, osmium, cobalt, iron, zinc, ruthenium, praseodymium, chromium, nickel, aluminum, tin, zinc, titanium, tantalum, zirconium, antimony, indium, yttrium, and lanthanum, metal oxides such as zinc oxide, titanium oxide, cesium oxide, antimony oxide, tin oxide, indium tin oxide, yttrium oxide, lanthanum oxide, zirconium oxide, aluminum oxide, magnesium oxide, and silicon oxide, metal fluorides such as lithium fluoride, magnesium fluoride, aluminum fluoride, and cryolite, metal phosphates such as calcium phosphate, carbonates such as calcium carbonate, sulfates such as barium sulfate and magnesium sulfate, nitrides such as silicon nitride, boron nitride, and carbon nitride, silicates such as wollastonite, sepiolite, and xonotlite, titanates such as potassium titanate and strontium titanate, and carbon compounds such as carbon, fullerene, carbon fiber, carbon nanotube, and silicon carbide. Two or more of these particles may be used together.

As the polyester film of the present invention tends to be used in applications where electrical insulating properties are required, the material of each of the plate-like particle (b1) and the needle-like particle (b2) is preferably a material that has no conductivity, for example, a metal oxide such as zinc oxide, titanium oxide, cesium oxide, antimony oxide, tin oxide, indium tin oxide, yttrium oxide, lanthanum oxide, zirconium oxide, aluminum oxide, magnesium oxide, or silicon oxide, a metal fluoride such as lithium fluoride, magnesium fluoride, aluminum fluoride, or cryolite, a metal phosphate such as calcium phosphate, a carbonate such as calcium carbonate, a sulfate such as barium sulfate or magnesium sulfate, a nitride such as silicon nitride, boron nitride, or carbon nitride, a silicate such as wollastonite, sepiolite, or xonotlite, or a titanate such as potassium titanate. In the case in which such a material is used, insulating properties of the particle are exhibited and thereby long-term electrical insulating properties, which constitute an effect of the present invention, are remarkably exhibited.

The polyester film of the present invention has a layer (P layer), the layer containing the crystalline polyester (A) and at least one of the plate-like particle (b1) having an aspect ratio of 2 or more and the needle-like particle (b2) having an aspect ratio of 2 or more, in which the total content (Wb) of the plate-like particle (b1) having an aspect ratio of 2 or more and the needle-like particle (b2) having an aspect ratio of 2 or more in the P layer is not lower than 10 mass%.

Although the P layer is simply required to contain at least one of the plate-like particle (b1) having an aspect ratio of 2 or more and the needle-like particle (b2) having an aspect ratio of 2 or more, it is more preferable that the layer contain both the plate-like particle (b1) and the needle-like particle (b2). In the latter case, the Wb2/Wb1 value (Wb1 (% by mass) being the content of the plate-like particle (b1) having an aspect ratio of 2 or more and Wb2 (% by mass) being the content of the needle-like particle (b2) having an aspect ratio of 2 or more) is preferably not smaller than 0.7 and not greater than 9 for enhancing thermal conductivity, more preferably not smaller than 1 and not greater than 8, further preferably 2 or more and not greater than 7. In the case in which the Wb2/Wb1 value is too small or too great, the probability at which the plate-like particle and the needle-like particle come into contact with each other may be reduced, decreasing the degree at which the thermal conductive rate of the film in a thickness direction is enhanced.

The Young's modulus of the polyester film of the present invention needs to be 2 GPa or more. The Young's modulus herein is determined by measuring Young's moduli of the film as the orientation is changed by 10° in the plane of the film and calculating the average value of the greatest Young's modulus (Ea) and a Young's modulus (Eb) measured at an orientation orthogonal to that for the greatest Young's modulus. The Young's modulus is more preferably 2 GPa or more, further preferably not smaller than 3 GPa. The Young's modulus correlates with the orientation and the crystal state of the crystalline polyester (A). In the case in which the Young's modulus of the polyester film is lower than 2 GPa, it means that the orientation and the crystallinity of the crystalline polyester (A) are low and thereby heat resistance and dimensional stability are low. In the case in which the Young's modulus of the polyester film of the present invention is 2 GPa or more, excellent heat resistance and excellent dimensional stability can be obtained.

A dynamic storage elastic modulus (E') of the polyester film of the present invention at 100°C determined by dynamic viscoelasticity measurement (hereinafter, called DMA) at a frequency of 1 Hz is preferably not smaller than $5 \times 10^7$ Pa, more preferably not smaller than $1 \times 10^8$ Pa, further preferably not smaller than $5 \times 10^8$ Pa. In the case in which the E' value of the polyester film is too small, it means that the orientation and the crystallinity of the crystalline polyester (A) are low and thereby heat resistance and dimensional stability may be low. In the case in which the E' value of the polyester film of the present invention is not smaller than $5 \times 10^7$ Pa, excellent heat resistance and excellent dimensional stability can be obtained.

With the content of the particle (B) in the P layer of the polyester film of the present invention being defined as Wb (% by mass) and the porosity of the P layer of the polyester film of the present invention being defined as V (% by volume), the V/Wb value needs to be not greater than 1. The porosity (V) (% by volume) herein is the proportion of the area of space in a cross-sectional area of the film in a cross-sectional SEM image of the P layer. The porosity is more preferably not greater than 0.8, further preferably not greater than 0.6, particularly preferably not greater than 0.5. In the case in which the V/Wb value is greater than 1, air (which has a low thermal conductive rate) is present in a great proportion in the film, resulting in a decrease in thermal conductivity of the film. The lower limit of the V/Wb value is 0. In the case in which the V/Wb value of the polyester film of the present invention is not greater than 1, excellent thermal conductivity can be obtained.

To obtain the polyester having the Young's modulus of 2 GPa or more, it is necessary that the polyester composition containing the P layer be stretched in at least one axial direction by the method described below. Typically, however, the crystalline polyester (A) is detached from the particle (B) at the interface therebetween in the stretching step and thereby voids are formed, resulting in the V/Wb value to be greater than 1. To make the Young's modulus of the polyester film of the present invention be 2 GPa or more and to make the V/Wb value be not greater than 1, in the present invention the surface of the particle (B) have a substituent reactive with the crystalline polyester (A) (hereinafter, the substituent is called reactive substituent (a)). The reactive substituent (a) herein refers to a substituent capable of reacting with and binding to a terminal carboxy group or a terminal hydroxy group of the polyester. Specific examples of the reactive substituent include substituents such as oxazoline group, epoxy group, carbodiimide group, isocyanate groups, and acid anhydride groups. A particularly preferable reactive substituent is an epoxy group, which has a particularly high reactivity with a polyester and forms a highly heat-resistant bond. Particularly, with this reactive substituent (a) being present on the surface of the particle (B), bonds are formed while the crystalline polyester (A) and the particle (B) are being kneaded together and thereby the resulting bonding at the interface becomes strong, making it possible to inhibit the crystalline polyester (A) from being detached from the particle (B) at the interface therebetween in the stretching step described below.

The amount of the reactive substituent (a) per unit surface area of the particle (B) in the polyester film of the present invention is not smaller than $0.2 \times 10^{-6}$ mol/m$^2$ and not greater than $1.4 \times 10^{-4}$ mol/m$^2$, preferably not smaller than $1 \times 10^{-5}$ mol/m$^2$ and not greater than $1 \times 10^{-4}$ mol/m$^2$, more preferably not smaller than $1.3 \times 10^{-5}$ mol/m$^2$ and not greater than $5 \times 10^{-5}$ mol/m$^2$. In the case in which the amount of the reactive substituent is smaller than $0.2 \times 10^{-6}$ mol/m$^2$, bonding between the crystalline polyester (A) and the particle (B) is not strong enough and thereby detachment at the interface during stretching becomes significant, resulting in a decrease in thermal conductivity. In the case in which the amount of the reactive substituent is greater than $1.4 \times 10^{-4}$ mol/m$^2$, too many bonds are formed and thereby the stretchability decreases. In the case in which the amount of the reactive substituent (a) per unit surface area of the particle (B) in the polyester film of the present invention is not smaller than $0.2 \times 10^{-6}$ mol/m$^2$ and not greater than $1.4 \times 10^{-4}$ mol/m$^2$, thermal conductivity and stretchability can be both obtained.

The amount of the reactive substituent (a) in the particle (B) can be determined by a known titration method. For example, the amount of epoxy groups in the present invention was determined by the following method. The particle (B) was dispersed in water to prepare a solution, to which an HCl-CaCl$_2$ reagent was added, followed by reaction allowed to proceed at a certain temperature for a certain period of time. The reaction was then terminated by the addition of excess KOH (the amount of which was known), followed by back titration with an aqueous HCl solution and phenolphthalein as an indicator. The titration was performed separately on the particle (B) with surface treatment and on the particle (B) without surface treatment, and the results from the latter titration were used as a blank test to determine the amount of consumed HCl and then calculate the amount (mol) of epoxy groups in the sample solution. The surface area (m$^2$) of the particle (B) was determined by the BET method described in JIS Z 8830 (2013). The amount (mol) of epoxy groups determined by the method described above was divided by the surface area (m$^2$) determined by the BET method, and thus the amount (mol/m$^2$) of the reactive substituent (a) was determined.

The particle (B) in the polyester film of the present invention is preferably treated with a surface-treating agent containing the reactive substituent (a). Specific examples of the surface-treating agent include silane coupling agents containing an oxazoline group, an epoxy group, a carbodiimide group, an acid anhydride group, or an isocyanate group, titanium coupling agents, and aluminate-type coupling agents. Among these, silane coupling agents containing an epoxy group, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane, silane coupling agents containing an isocyanate group, such as 3-isocyanatopropyltriethoxysilane and 3-isocyanatopropyltrimethoxysilane, and silane coupling agents containing an acid anhydride group, such as 3-trimethoxysilylpropylsuccinic anhydride, are suitably used, for example. Alkoxy oligomers containing the reactive substituent (a) are also suitably used. Also suitably used are resins produced by copolymerization of a monomer containing an epoxy group (such as glycidyl methacrylate) or a monomer containing an isocyanate group (such as 2-isocyanate ethyl methacrylate) with styrene, ethylene, propylene, or acrylic acid, for example; polycarbodiimide; resins containing an oxazoline group; and the like. Among these, from the viewpoint that the surface-treating agent can bind to both the crystalline polyester (A) and the particle (B) to form a strong interface, silane coupling agents containing an epoxy group, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane, silane coupling agents containing an isocyanate group, such as 3-isocyanatopropyltriethoxysilane and 3-isocyanatopropyltrimethoxysilane, silane coupling agents containing an acid anhydride group, such as 3-trimethoxysilylpropylsuccinic anhydride, and alkoxy oligomers containing the reactive substituent (a) are particularly preferable. A mixture of two or more of the surface-treating agents containing the reactive substituent (a) and a mixture of the surface-treating agent containing the reactive substituent (a) and a surface-treating agent containing no reactive substituent are also preferably used.

The P layer of the polyester film of the present invention is obtained by the production method described below using a resin composition containing the crystalline polyester (A) and at least one of the plate-like particle (b1) having an aspect ratio of 2 or more and the needle-like particle (b2) having an aspect ratio of 2 or more. The difference ($\Delta$Tcg) between the glass transition temperature (Tg) and a cold crystallization peak top temperature (Tcc) of the P layer is preferably not lower than 44°C. The glass transition temperature (Tg) and the cold crystallization peak top temperature (Tcc) herein are the glass transition temperature (Tg) and the cold crystallization peak top temperature (Tcc), respectively, measured while the temperature is being raised (at a temperature raising rate of 20°C/min) . The glass transition temperature (Tg) and the cold crystallization peak top temperature (Tcc) are determined based on a differential scanning calorimetry chart for the 2nd RUN, obtained by the method described below in accordance with JIS K-7121 (1987) . The difference between the Tg value and the Tcc value thus obtained is defined as $\Delta$Tcg. The $\Delta$Tcg value is more preferably not lower than 45°C and not higher than 50°C. In the case in which the $\Delta$Tcg value is too low, stretching is difficult to perform and film-forming properties may be poor. In the case in which the $\Delta$Tcg value of the polyester film of the present invention is not lower than 44°C, excellent film-forming properties can be obtained. Examples of preferable methods of making the $\Delta$Tcg value be not lower than 44°C include increasing the IV value of the crystalline polyester (A) in the P layer. To increase the IV value of the crystalline polyester (A), it is particularly preferable that a chip-like composition obtained by mixing the crystalline polyester (A) and the particle (B) in the production method described below be subjected to solid-phase polymerization before film formation.

The polyester film of the present invention may be either a monolayer film consisting of the P layer alone or a laminate film having a laminate of the P layer and an additional layer (hereinafter, the additional layer is sometimes abbreviated as P2 layer), and either of these cases is preferably used. In the case of the laminate structure, the proportion of the P layer in the entire polyester film is preferably not lower than 40 volume%, more preferably not lower than 50 volume%, further preferably not lower than 70 volume%, particularly preferably not lower than 80 volume%, for the high heat resistance of the P layer to be exhibited. In the case in which the proportion of the P layer is lower than 40 volume%, the effect of the P layer to enhance heat resistance may not be exhibited. In the case in which the polyester film of the present invention has the laminate structure and the proportion of the P layer is not lower than 40 volume%, the heat resistance of the polyester film can be high compared to that of conventional polyester films.

The thickness of the P layer of the polyester film of the present invention is preferably not smaller than 5 $\mu$m and not greater than 500 $\mu$m, more preferably not smaller than 10 $\mu$m and not greater than 400 $\mu$m, further preferably not smaller than 20 $\mu$m and not greater than 300 $\mu$m. In the case in which the thickness is smaller than 5 $\mu$m, film-forming properties of the film are poor and film formation may be difficult to perform. In the case in which the thickness is greater than 500 $\mu$m, it may be difficult to process (for example, to cut or fold) the electrical insulation sheet having the film. In the case in which the thickness of the P layer of the polyester film of the present invention is not smaller than 5 $\mu$m and not greater than 500 $\mu$m, film-forming properties and workability can be both obtained.

The thickness of the polyester film of the present invention as a whole is preferably not smaller than 5 $\mu$m and not greater than 500 $\mu$m, more preferably not smaller than 10 $\mu$m and not greater than 400 $\mu$m, further preferably not smaller than 20 $\mu$m and not greater than 300 $\mu$m. In the case in which the thickness is smaller than 5 $\mu$m, film-forming properties of the film are poor and film formation may be difficult to perform. In the case in which the thickness is greater

than 500 μm, it may be difficult to process (for example, to cut or fold) the electrical insulation sheet having the film. In the case in which the thickness of the polyester film of the present invention as a whole is not smaller than 5 μm and not greater than 500 μm, film-forming properties and workability can be both obtained.

The elongation at break of the polyester film of the present invention is preferably not lower than 10%, more preferably not lower than 20%, further preferably not lower than 30%. In the case in which the elongation at break of the polyester film of the present invention is lower than 10%, the film readily breaks during film formation, during transfer in continuous processing, and during processing such as cutting. In the case in which the elongation at break of the polyester film of the present invention is not lower than 10%, film-forming properties and workability can be both obtained. Examples of the method of making the elongation at break of the polyester film of the present invention be not lower than 10% include using a preferable amount of the surface-treating agent in the production method described below and then, in particular, subjecting the chip-like composition obtained by mixing the crystalline polyester (A) and the particle (B) to solid-phase polymerization before film formation.

The thermal conductive rate of the polyester film of the present invention in the film thickness direction is preferably not lower than 0.15 W/mK, more preferably not lower than 0.20 W/mK, further preferably not lower than 0.25 W/mK. With this thermal conductive rate, the polyester film of the present invention can be suitably used as motor insulating materials (such as insulating sheets for wind power generation, sheets for hybrid motors, and sheets for motors in air conditioners) , solar-cell back sheets, electrical insulating materials for use in electronic components (such as adhesive tape, flexible printed boards, and membrane switches for electronic components), and the like. Preferable examples of the method of increasing the thermal conductive rate in the film thickness direction include adopting the preferable formulation of raw materials described above and then, in particular, subjecting the chip-like composition obtained by mixing the crystalline polyester (A) and the particle (B) to solid-phase polymerization before film formation.

The surface specific resistance of the polyester film of the present invention is preferably not lower than $10^{13}$ Ω/□. With this surface specific resistance, the polyester film of the present invention can be suitably used as motor insulating materials (such as insulating sheets for wind power generation, sheets for hybrid motors, and sheets for motors in air conditioners), solar-cell back sheets, electrical insulating materials for use in electronic components (such as adhesive tape, flexible printed boards, and membrane switches for electronic components), and the like.

The P2 layer put on the polyester layer (P layer) of the polyester film of the present invention may be any appropriate layer depending on the application, and examples include a function-imparting polyester layer, an antistatic layer, a layer for adhering to another material, an ultraviolet-resistant layer for imparting ultraviolet resistance, a flame-retardant layer for imparting flame retardancy, and a hard coating for enhancing impact resistance and abrasion resistance.

When the polyester film of the present invention is evaluated by the UL94-VTM test method, the burned distance is preferably not greater than 125 mm, more preferably not greater than 115 mm, further preferably not greater than 105 mm, even further preferably not greater than 100 mm, particularly preferably not greater than 95 mm. In the case in which the burned distance of the polyester film of the present invention evaluated by the UL94-VTM test method is not greater than 125 mm, a solar-cell back sheet or the like that has the polyester film of the present invention can have enhanced safety.

Next, an example of the method for producing the polyester film of the present invention is described below. The scope of the present invention, however, is not limited to the method below.

The method for producing the polyester film of the present invention has the following steps 1 to 3 in sequence.

(Step 1) A step of melt-kneading the crystalline polyester (A) with at least one of the plate-like particle (b1) having an aspect ratio of 2 or more and the needle-like particle (b2) having an aspect ratio of 2 or more; in particular, a step of melt-kneading the crystalline polyester (A) with at least one of the plate-like particle (b1) having an aspect ratio of 2 or more and having the substituent reactive with the crystalline polyester (A) (hereinafter, the substituent is called reactive substituent (a)) on the surface and the needle-like particle (b2) having an aspect ratio of 2 or more and having the reactive substituent (a) on the surface (hereinafter, the step is called melt-kneading step)
(Step 2) A step of melting the resulting resin composition containing the crystalline polyester (A) and the at least one of the plate-like particle (b1) having an aspect ratio of 2 or more and the needle-like particle (b2) having an aspect ratio of 2 or more and discharging the resin composition through a nozzle to obtain a film (hereinafter, the step is called melt-extruding step)
(Step 3) A step of biaxially stretching the resulting film (hereinafter, the step is called stretching step)

Next, the steps 1 to 3 and the like are described in detail.

(Step 1)

The crystalline polyester (A) as a raw material used in the method for producing the polyester film of the present invention is obtained by subjecting the dicarboxylic acid constituent and the diol constituent described above to esterification reaction or transesterification reaction for polycondensation and thus achieving an intrinsic viscosity of not lower than 0.4.

In the transesterification reaction, a known transesterification reaction catalyst such as magnesium acetate, calcium acetate, manganese acetate, cobalt acetate, or calcium acetate may be used, and antimony trioxide or other substances to serve as a polymerization catalyst may be added. In the case in which an alkali metal such as potassium hydroxide is added in an amount of several parts per million (ppm) in the esterification reaction, synthesis of diethylene glycol as a by-product is inhibited and, in addition, heat resistance and hydrolysis resistance are enhanced.

As the polycondensation reaction catalyst, a solution of germanium dioxide in ethylene glycol, antimony trioxide, a titanium alkoxide, or a titanium chelate compound may be used, for example.

Additional additives may also be added provided that the effects of the present invention are not impaired, and examples of the additional additives include magnesium acetate for imparting electrostatic application properties and calcium acetate as a co-catalyst. In addition, various particles for imparting film smoothness may be added, or particles that contain a catalyst and are to be deposited inside the polyester film may be added.

In the method for producing the polyester film of the present invention, in the case in which the particle (B) contains the reactive substituent (a), examples of the method of using the particle (B) include the following: a method i) in which the particle is dispersed in a solvent and to the resulting dispersion, while stirring, the surface-treating agent or a solution or a dispersion containing the surface-treating agent is added; and a method ii) in which to powders of the particle while being stirred, a solution or a dispersion containing the surface-treating agent is added. In the case in which the surface-treating agent is a resin-based one, a method iii) is also preferably employed in which the particle and the surface-treating agent are subjected to melt-kneading. Regarding the amount of the surface-treating agent added, the proportion (by mass) of the surface-treating agent is preferably not lower than 0.1 parts by mass and not higher than 5 parts by mass, more preferably not lower than 0.2 parts by mass and not higher than 3 parts by mass, further preferably not lower than 0.5 parts by mass and not higher than 1.5 parts by mass, relative to the content (Wb) of the particle (B) being defined as 100 parts by mass. In the case in which the proportion (by mass) of the surface-treating agent is lower than 0.1 parts by mass, bonding between the crystalline polyester (A) and the particle (B) is not strong enough and thereby detachment at the interface during stretching is significant, resulting in a decrease in thermal conductivity. In the case in which the proportion (by mass) of the surface-treating agent is higher than 5 parts by mass, too many bonds are formed and thereby the stretchability decreases.

Then, to add the plate-like particle (b1) or the needle-like particle (b2) to the crystalline polyester (A) obtained above, it is preferable that a combination of the crystalline polyester (A) and the plate-like particle (b1) or a combination of the crystalline polyester (A) and the needle-like particle (b2) be subjected to melt-kneading in advance in a vented twin screw kneader-extruder or a tandem extruder. To prevent the plate-like particle (b1) or the needle-like particle (b2) from breaking during melt-kneading, it is preferable that the plate-like particle (b1) or the needle-like particle (b2) be fed to the crystalline polyester (A) while the crystalline polyester is in a melted state and it is preferable that the feeding into the extruder be performed by side-feeding.

During melt-kneading performed for integrating the plate-like particle (b1) and/or the needle-like particle (b2) with the crystalline polyester (A), the crystalline polyester (A) receives strong heating and consequently degrades to a considerable degree. Considering this phenomenon, it is preferable from the viewpoint of reducing degradation of the crystalline polyester (A) and obtaining stretchability, mechanical properties, heat resistance, and the like that a high-concentration master pellet be prepared (which is to be used in an amount greater than the content of the plate-like particle (b1) or the needle-like particle (b2) in the P layer) and the resulting high-concentration master pellet be mixed with the crystalline polyester (A) for dilution so as to make a predetermined amount of the plate-like particle (b1) or the needle-like particle (b2) be contained in the P layer.

The concentration of the particle in the high-concentration master pellet is preferably not lower than 20 mass% and not higher than 80 mass%, further preferably not lower than 25 mass% and not higher than 70 mass%, further more preferably not lower than 30 mass% and not higher than 60 mass%, particularly preferably not lower than 40 mass% and not higher than 60 mass%. In the case in which the concentration is lower than 20 mass%, the amount of the master pellet added to the P layer is great and thereby the content of a degraded crystalline polyester (A) in the P layer is great, potentially resulting in a decrease in stretchability, mechanical properties, heat resistance, and the like. In the case in which the concentration is higher than 80 mass%, it may be difficult to prepare the master pellet or to uniformly mix the master pellet with the crystalline polyester (A).

Examples of the method of integrating both the plate-like particle (b1) and the needle-like particle (b2) with the crystalline polyester (A) include the following methods: a method in which a master pellet of the crystalline polyester (A) containing the plate-like particle (b1) and a master pellet of the crystalline polyester (A) containing the needle-like particle (b2) are separately prepared, and these master pellets are mixed with the crystalline polyester (A) for dilution to make the plate-like particle (b1) and the needle-like particle (b2) be contained in the P layer at a predetermined ratio; and a method in which a master pellet containing the plate-like particle (b1) and the needle-like particle (b2) at a predetermined ratio is prepared, and the resulting master pellet is mixed with the crystalline polyester (A) for dilution. Either of these methods may be employed.

The composition thus obtained in the step 1 is used in the step described next (Step 2). In this next step, it is particularly preferable to use the high-concentration master pellet (in which the content of the plate-like particle (b1) or the needle-like particle (b2) is greater than the content of the plate-like particle (b1) or the needle-like particle (b2) in the P layer) and then subject the resulting master pellet to solid-phase polymerization, from the viewpoints that the molecular weight can increase and the number of terminal carboxy groups can decrease. During the solid-phase polymerization reaction, it is preferable that the temperature during solid-phase polymerization be 30°C lower than the melting point (Tm) of the polyester or lower, 60°C lower than the melting point (Tm) of the polyester or higher, and the degree of vacuum be not higher than 0.3 Torr.

(Step 2)

Described next is the step of forming a sheet of the composition obtained in the step 1 that contains the crystalline polyester (A) and the particle (B) consisting of the plate-like particle (b1) and the needle-like particle (b2).

In the case in which the polyester film of the present invention has a monolayer film structure consisting of the P layer alone, sheet formation may be performed by heating and melting raw materials of the P layer in an extruder and then extruding the resultant through a nozzle onto a cold casting drum (the melt casting method); by dissolving raw materials of the P layer in a solvent and extruding the resulting solution through a nozzle onto a support such as a casting drum or an endless belt to form a film, followed by drying and removing the solvent of the film layer to form a sheet (the solution casting method); or other methods. Among these methods for sheet formation, from the viewpoint of high productivity, the melt casting method is preferable (hereinafter, the step of forming a sheet by the melt casting method is called melt-extruding step).

In the case in which the melt-extruding step is employed in the method for producing the polyester film of the present invention, a dried composition containing the crystalline polyester (A) and at least one of the plate-like particle (b1) and the needle-like particle (b2) is subjected to melt-extrusion from an extruder through a nozzle to form a sheet, then the sheet is made electrostatically adhered to and cooled on a drum the surface of which has been cooled to a temperature of not lower than 10°C and not higher than 60°C for solidification to prepare a non-stretched sheet, and the resulting non-stretched sheet is biaxially stretched.

In melt-extrusion using an extruder, melting is performed in a nitrogen atmosphere. The duration of time after chip feeding into the extruder and before arrival at a nozzle for extrusion is preferably as short as possible. As a guide, the duration of time is preferably not longer than 30 minutes, more preferably not longer than 15 minutes, further preferably not longer than 5 minutes, for reducing degradation due to a decrease in molecular weight and for inhibiting an increase in the number of terminal carboxy groups.

(Step 3)

The composition in a sheet form obtained in the step 2 is biaxially stretched at a temperature of not lower than the glass transition temperature (Tg). The method of biaxially stretching may be either sequential biaxial stretching in which stretching in a longitudinal direction and stretching in a width direction are performed separately, or simultaneous biaxial stretching in which stretching in the longitudinal direction and stretching in the width direction are performed simultaneously. Stretching conditions may be as follows, for example: 1) in simultaneous biaxial stretching, the stretching temperature is not lower than the glass transition temperature (Tg) of the polyester and not higher than Tg+15°C; and 2) in sequential biaxial stretching, the stretching temperature for a first axial direction is not lower than the glass transition temperature (Tg) of the polyester and not higher than Tg+15°C (more preferably not lower than Tg and not higher than Tg+10°C) and the stretching temperature for a second axial direction is not lower than Tg+5°C and not higher than Tg+25°C.

In either of simultaneous biaxial stretching and sequential biaxial stretching, the stretch factor in either the longitudinal direction or the width direction is not smaller than 1.5 and not greater than 4, more preferably 2 or more.0 and not greater than 3.5, further preferably 2 or more.0 and not greater than 3.0. The area stretch factor obtained from a combination of the stretch factor in the longitudinal direction and the stretch factor in the width direction is 2 or more and not greater than 16, more preferably not smaller than 4 and not greater than 13, further preferably not smaller than 4 and not greater than 9. In the case in which the area stretch factor is smaller than 2, the orientation of the crystalline polyester (A) in the resulting film is low and the mechanical strength and the heat resistance of the resulting film may be low. In the case in which the area stretch factor is greater than 14, breaking tends to occur during stretching and the porosity (V) of the resulting film tends to be great to cause a decrease in thermal conductivity.

To ensure that the resulting biaxially-stretched film has adequate crystal orientation and is thereby flat and dimensionally stable, heat treatment is performed at a temperature (Th) of not lower than the glass transition temperature (Tg) of the crystalline polyester (A) and lower than the melting point (Tm) of the crystalline polyester for a period of not shorter than 1 second and not longer than 30 seconds, followed by slow and uniform cooling to room temperature. Regarding the heat treatment temperature (Th) in the method for producing the polyester film of the present invention, the difference (Tm-Th) between this heat treatment temperature and the melting point (Tm) of the polyester is not smaller than 20°C and not greater than 90°C, more preferably not smaller than 25°C and not greater than 70°C, further preferably not smaller than 30°C and not greater than 60°C. During the heat treatment step, relaxing treatment to 3% to 12% in the width direction or the longitudinal direction may be performed as needed. Subsequently, corona discharge treatment and the like are performed as needed for enhancing adhesion to other materials, followed by winding. Thus, the P layer can be obtained.

The method for producing the polyester film of the present invention that has a multilayer structure consisting of the P layer and the additional layer (P2 layer) is exemplified as follows. In the case in which each layer to be laminated is mainly made of a thermoplastic resin, two different materials are separately fed into two respective extruders, followed by melting and coextruding through respective nozzles onto a cold casting drum to form a sheet (coextrusion); a monolayer sheet is prepared, and a laminating material is fed into an extruder for melt-extrusion (by which the laminating material is extruded through a nozzle onto at least one side of the monolayer sheet) (melt lamination); the P layer and the P2 layer to be laminated are separately prepared, and then thermocompression bonding is performed using heated rolls and the like (heat lamination); bonding is performed using an adhesive agent (adhesion); the material or materials of the P2 layer are dissolved in a solvent and the resulting solution is applied to the P layer that has been prepared in advance (coating) ; or the like. Two or more of these techniques may be combined.

In the case in which the P2 layer is mainly composed of a material that is not a thermoplastic resin, the P layer and the P2 layer to be laminated may be separately prepared and then bonded to each other with an adhesive agent or the like interposed therebetween (adhesion) . In the case in which that the P layer is made of a curing material, the curing material may be applied to the top side of the P layer and then cured by electromagnetic wave irradiation, heat treatment, or the like. Other preferable techniques may also be employed, and examples of these techniques include coextrusion, melt lamination, solution lamination, and heat lamination (all of these techniques being described above) as well as dry processes such as vapor deposition and sputtering and wet processes such as plating.

As the technique of forming the P2 layer from differennt materials by coating, either of the following techniques may be employed: in-line coating in which coating is performed during formation of the polyester film of the present invention; and off-line coating in which coating is performed after formation of the polyester film. Among these techniques, in-line coating is more preferable because of the efficiency in coating that is performed simultaneously with formation of the polyester film and because of the excellent adhesion of the resulting layer to the polyester film. During coating, the surface of the polyester film is preferably subjected to corona treatment and the like.

The polyester film of the present invention may be formed by the steps described above, and the resulting film has excellent thermal conductivity and excellent mechanical properties. The polyester film of the present invention has excellent properties and thereby can be suitably used in applications where electrical insulating properties and thermal conductivity are both important, for example, in electrical insulating materials such as copper-clad laminates, solar-cell back sheets, adhesive tape, flexible printed boards, membrane switches, heating element sheets, and flat cables as well as capacitor materials, automobile materials, and building materials. Preferable among these applications are electrical insulating materials for motors and the like (such as insulating sheets for wind power generation, sheets for hybrid motors, and sheets for motors in air conditioners), solar-cell back sheet materials, and electrical insulating materials for use in electronic components (such as adhesive tape, flexible printed boards, and membrane switches for electronic components). Because the polyester film of the present invention is excellent in thermal conductivity and mechanical properties compared to conventional polyester films, electrical insulation sheets (such as insulating sheets for wind power generation), solar-cell back sheets, and other products having the polyester film of the present invention can have enhanced efficiency of power generation compared to the efficiency of conventional wind power generators and solar cells. In the case in which the polyester film of the present invention is used in sheets for hybrid motors and sheets for motors in air conditioners, power consumption can be reduced. In the case in which the polyester film of the present invention is used in adhesive tape, flexible printed boards, and membrane switches for electronic components, for example, not only low power consumption but also high-speed operation and enhanced reliability can be achieved.

[Method of evaluation of properties]

A. Analysis of composition of polyester

A polyester was hydrolyzed with an alkali and then gas chromatography or high-performance liquid chromatography was performed for analysis of each component. The peak area for each component was used to determine the composition ratio of the component. An example is shown below. A dicarboxylic acid constituent and other constituents were measured by high-performance liquid chromatography. The analysis can be suitably performed under known measurement conditions, and an example of the measurement conditions is shown below.

> Apparatus: Shimadzu LC-10A
> Column: YMC-Pack ODS-A 150×4.6 mm S-5 μm 120A
> Column temperature: 40°C
> Flow rate: 1.2 ml/min
> Detector: UV 240 nm

Quantification of the diol constituent and other constituents was suitably performed by a known method based on gas chromatography, and an example of the measurement conditions is shown below.

> Apparatus: Shimadzu 9A (manufactured by Shimadzu Corporation)
> Column: SUPELCOWAX-10 capillary column 30 m
> Column temperature: 140°C to 250°C (temperature raising rate: 5°C/min)
> Flow rate: nitrogen 25 ml/min
> Detector: FID

B. Intrinsic viscosity (IV)

A polyester film (or a P layer of a laminate film) was dissolved in 100 ml of o-chlorophenol (polyester concentration in solution, C = 1.2 g/ml), and the viscosity of the resulting solution at 25°C was measured with an Ostwald viscometer. In the same manner, the viscosity of the solvent was also measured. The viscosity of the solution and the viscosity of the solvent thus measured as well as the following formula (1) were used to calculate [η], which was defined as the intrinsic viscosity (IV) :

$$\eta sp/C = [\eta] + K[\eta]^2 \cdot C \quad (1)$$

(in the formula, ηsp = (solution viscosity) / (solvent viscosity) - 1, and K is the Huggins' constant (considered to be 0.343)). The measurement was performed after the particles (B) were separated.

C. Glass transition temperature (Tg) of P layer, cold crystallization temperature (Tcc), melting point (Tm) of crystalline polyester (A), ΔHm value (amount of heat for crystal melting)

A polyester film (or a P layer scraped off from a laminate film) was subjected to measurement in accordance with JIS K-7121 (1987) and JIS K-7122 (1987) performed by a differential scanning calorimeter "Robot DSC-RDC220" and to data analysis performed by a disc session "SSC/5200", both devices being manufactured by Seiko Instruments & Electronics Ltd. The measurement was performed in the following manner.

(1) 1st RUN measurement

On a sample pan, 5 mg of a polyester film (or a P layer scraped off from a laminate film) as a sample was weighed. The resin was heated from 25°C to 300°C at a temperature raising rate of 20°C/min at a temperature raising rate of 20°C/minute and then maintained in that state for 5 minutes, followed by rapid cooling to a temperature of not higher than 25°C.

(2) 2nd RUN

Immediately after the completion of the 1st RUN measurement, the resultant was reheated from room temperature to 300°C at a temperature raising rate of 20°C/minute for measurement.

In a differential scanning calorimetry chart obtained for the 2nd RUN, a staircase-shape shift was observed indicating the occurrence of glass transition. Based on this staircase-shape shift, the glass transition temperature (Tg) of a crystalline polyester (A) was determined by a method described in JIS K-7121 (1987) "9.3 Determination of Glass Transition Temperature, (1) Midpoint Glass Transition Temperature (Tmg) " (a straight line was drawn a certain distance away from the baseline (and its extension) in the ordinate direction, then the point of intersection between the straight line and a curve of the staircase-shape shift indicating the occurrence of glass transition was specified, and then the reading of the temperature for the point of intersection was defined as the glass transition temperature). The temperature for the top of the cold crystallization peak was defined as the cold crystallization peak temperature (Tcc) of the crystalline polyester (A) in the P layer. The values (Tg and Tm) thus determined and the following formula (2) were used to determine

the difference ($\Delta$Tcg) between the glass transition temperature (Tg) of the P layer and the cold crystallization peak top temperature (Tcc).

$$\Delta\text{Tcg} = \text{Tcc} - \text{Tg} \quad (2)$$

Regarding thermal properties (the melting point (Tm) and the amount of heat for crystal melting ($\Delta$Hm)) of the crystalline polyester (A) as a raw material, measurement was performed by the same method as above, but this time using the crystalline polyester (A). The temperature for the top of the crystal melting peak in the differential scanning calorimetry chart obtained for the 2nd RUN was defined as the melting point (Tm), and the amount of heat for the crystal melting peak obtained according to "9. Determination of heat of transition" described in JIS K-7122 (1987) was defined as the amount of heat for crystal melting ($\Delta$Hm).

D. Young's modulus, elongation at break

The elongation at break of the polyester film was determined by pulling a fragment of the polyester film having a size of 1 cm $\times$ 20 cm at a chuck-to-chuck distance of 5 cm and a strain rate of 300 mm/min according to ASTM-D882 (1997) . From the resulting load-strain curve, the Young's modulus was determined. The measurement was repeated five times for one sample, and the average value was used.

First, the direction (direction a) at which the Young's modulus was at its maximum was determined as follows. An arbitrary direction was designated as 0°, and the Young's modulus was measured every 10° from -90° to 90° in the plane of the film all in the same manner. In this way, the direction (direction a) at which the Young's modulus was at its maximum was determined. Thus, the Young's modulus (Ea) was determined. Subsequently, the Young's modulus (Eb) at a direction (direction b) that was orthogonal to the direction a in the same plane was determined. The average value of these values (Ea and Eb) was defined as the Young's modulus. The elongation at break was defined as the average value of the elongation at break in the direction a and the elongation at break in the direction b.

E. Porosity (V)

The porosity was determined by the following procedures (A1) to (A5). Measurement was performed on ten randomly selected cross-sections in the film, and the arithmetic mean was defined as the porosity (V) (% by volume) of the P layer.

(A1) The film was cut with a microtome vertically to the direction of the plane of the film, with the cross section not crushed in the thickness direction.
(A2) The cross section was observed with a scanning electron microscope, and an image under 3000-time magnification was obtained. The observation was performed for a randomly selected position in the P layer in the image provided that the direction from the lower end to the upper end of the image was parallel to the thickness direction of the film and the direction from the left end to the right end of the image was parallel to the direction of the plane of the film.
(A3) The area of the P layer in the image obtained in (A2) was measured and defined as A.
(A4) The area of all the spaces in the P layer in the image was measured and defined as B. The measurement target included not only air bubbles that were entirely included within the image but also air bubbles that were only partially included within the image.
(A5) The value B was divided by the value A, and the resulting value (B/A) was multiplied by 100. This value thus obtained was defined as the proportion of space areas in the P layer, which was used as the porosity (V) (% by volume).

F. Content (Wb1) of plate-like particle (b1) and content (Wb2) of needle-like particle (b2) in P layer

The content (Wb1) of the plate-like particle (b1) and the content (Wb2) of the needle-like particle (b2) in the P layer were determined in the following procedures (B1) to (B13) by using a polyester film (or a P layer scraped off from a laminate film).

(B1) The mass (w1) of the polyester film (or the P layer scraped off from a laminate film) was measured.
(B2) The polyester film (or the P layer scraped off from a laminate film) was dissolved in hexafluoro-2-isopropanol and then centrifugation was performed to fractionate insoluble components, which were particles.
(B3) The resulting particles were rinsed in hexafluoro-2-isopropanol, followed by centrifugation. The rinsing was repeated until a rinsing liquid yielded after centrifugation did not become cloudy by addition of ethanol.

(B4) The rinsing liquid in (B3) was heated and distilled, followed by air drying for 24 hours and then vacuum drying at a temperature of 60°C for 5 hours. Thus, particles were obtained. The mass (w2) of the resulting particles was determined, and then the following formula (3) was used to calculate the total content (Wb) (% by mass) of the particles.

$$Wb = (w2/w1) \times 100 \quad (3)$$

(B5) The particles obtained in (B4) were immobilized on an observation platform equipped with a 3D gauge for dimension measurement. Then, an image of the particles under 3000-time magnification was obtained using a scanning electron microscope.

(B6) Then, a single primary particle randomly selected from the image was subjected to image analysis on 3D measurement software. Thus, a circumscribing rectangular parallelepiped was drawn.

(B7) The size of the particle was measured with the longest side of the circumscribing rectangular parallelepiped being regarded as equivalent to the length (l) of the particle, the shortest side being regarded as equivalent to the thickness (t) of the particle, and the remaining side being regarded as equivalent to the width (b) of the particle. Thus, the shape of the particle was uniquely defined by a combination of these three values (l, t, b).

(B8) The procedures of (B6) and (B7) were performed for 500 randomly selected primary particles. Each of the three values, namely, the length (l), the thickness (t), and the width (b), was plotted to obtain a distribution curve. The abscissa of the distribution curve indicates the sizes ($\mu$m) of the particles, and the ordinate indicates the number (number) of the particles .

(B9) The position of the peak of each of the three distribution curves was identified, and the reading on the abscissa for the position was defined as the average length (lp), the average thickness (tp), or the average width (bp) of the particles. If a single distribution curve had two or more peaks, it indicates that multiple types of particles different in shape coexisted. In such cases, the following procedures were performed: all possible particle shapes (combinations of lp, tp, and bp) conceivable from the peak positions were listed; each of the 500 primary particles subjected to size measurement was assigned to the most appropriate and closest particle shape among these possible particle shapes; particles assigned to the same particle shape were counted; and it was regarded that a particle shape to which five or more particles were assigned was actually present.

(B10) Among the particles assigned to different particle shapes in (B9), a particle having a ratio (l/b) of the length (l) to the width (b) of not lower than 1 and not higher than 2 was defined as a plate-like particle, and a particle having the ratio (l/b) of higher than 2 was defined as a needle-like particle.

(B11) Among the 500 particles subjected to size measurement in (B8), the plate-like particle defined in (B10) was subjected to calculation of the virtual volume ($\mu$m$^3$) by formula l $\times$ t $\times$ b to calculate the sum of the virtual volumes (Vv1) ($\mu$m$^3$). The chemical composition of the plate-like particle was determined by composition analysis by SEM/EDX (scanning electron microscope/energy dispersive X-ray spectroscopy). Based on the resulting chemical composition, a typical density (D1) (g/$\mu$m$^3$) of the particles was obtained from a known document (such as Filler Handbook (edited by The Society of Rubber Science and Technology, Japan, 1987)) by citation. Using formula D1 $\times$ Vv1, the mass (Wv1) of the plate-like particle was determined.

(B12) In the same manner as in (B11), the needle-like particle defined in (B10) among the 500 particles subjected to size measurement in (B8) was subjected to determination of the apparent mass (Wv2) (g).

(B13) The following formulae (4) and (5) were used to calculate the content (Wb1) (% by mass) of the plate-like particle (b1) in the P layer and the content (Wb2) (% by mass) of the needle-like particle (b2) in the P layer.

$$Wb1 = Wb \times (Wv1/(Wv1 + Wv2)) \quad (4)$$

$$Wb2 = Wb \times (Wv2/(Wv2 + Wv1)) \quad (5)$$

G. Thermal conductive rate in film thickness direction

To a polyester film, a laser absorbing spray (Black Guard Spray FC-153 manufactured by Finechemical Japan Co., Ltd.) was applied. The resultant was dried and then cut into a 10-mm-square fragment. The diffusivity of heat ($\alpha$) (m$^2$/s) of the fragment in the film thickness direction was measured at a temperature of 25°C with a Xe flash analyzer, LFA447 Nanoflash manufactured by NETZSCH. The measurement was repeated four times, and the average value was defined as the diffusivity of heat. Then, the following formula (6) was used to determine the thermal conductive rate.

$$\text{Thermal conductive rate (W/mK)} = \alpha\ (\text{m}^2/\text{s}) \times \text{specific heat}$$

$$(\text{J/kg} \cdot \text{K}) \times \text{density}\ (\text{kg/m}^3)\ (6)$$

The specific heat was determined using a polyester film according to JIS K-7123 (1987). The density was determined as follows: the film was cut into a fragment having a size of 30 mm × 40 mm; the density of the fragment was measured with an electronic densimeter (SD-120L manufactured by Mirage Trading Co., Ltd.) in an atmosphere at room temperature (23°C) and a relative humidity of 65%; and the measurement was repeated three times and the average value was used.

H. Heat resistance

A rectangular fragment having a size of 1 cm × 20 cm was cut out in a direction parallel to the direction a, followed by heat treatment in a hot-air oven at 150°C for 30 minutes and then cooling. According to the procedures in the section D described above, elongation at break was determined. The resulting value of elongation at break and the value of elongation at break (elongation at break before heat treatment) in the direction a obtained in the section D as well as the following formula (7) were used to calculate elongation retention.

$$\text{Elongation retention (\%)} = (\text{elongation at break before}$$

$$\text{heat treatment})/(\text{elongation at break after heat treatment}) \times$$

$$100\ (7)$$

The resulting value of elongation retention was used in the following evaluation. Samples having values within the range A are suitable for practical use.

    A: Elongation retention of not lower than 50%
    D: Elongation retention of lower than 50%

I. Surface specific resistance

The surface specific resistance of a film was measured with a digital ultrahigh-resistance micro ammeter R8340 (manufactured by Advantest Corporation). The measurement was performed for each side of the film, at any ten positions on each side. The average of the ten readings for each side was calculated, and the smaller average value was defined as the surface specific resistance. Before the measurement, the sample had been left overnight in a room at 23°C and 65%Rh. The resulting value was used in the following evaluation. Samples having values within the range A are suitable for practical use.

    A: Surface specific resistance of not lower than $10^{13}\ \Omega/\square$
    D: Surface specific resistance of lower than $10^{13}\ \Omega/\square$

J. Dynamic storage elastic modulus

The dynamic storage elastic modulus (E') was determined according to JIS-K7244 (1999) with a dynamic viscoelasticity measurement device DMS6100 (manufactured by Seiko Instruments Inc.). The temperature dependence of viscoelasticity properties of each film was evaluated under conditions of a pulling mode, an operation frequency of 1 Hz, a chuck-to-chuck distance of 20 mm, and a temperature raising rate of 2°C/min. The results of the evaluation were used to determine the dynamic storage elastic modulus (E') at 100°C.

EXAMPLES

Hereinafter, the present invention will be described by examples. The scope of the present invention, however, is not limited to these examples.

(Raw materials)

• Crystalline polyester (A):

PET-1: Using dimethyl terephthalate as an acid component and ethylene glycol as a diol component, germanium oxide (polymerization catalyst) was added 300 ppm (in terms of germanium atoms) to a polyester pellet to be obtained, followed by polycondensation reaction. Thus, a poly(ethylene terephthalate) pellet having an intrinsic viscosity of 0.64 was obtained. The resulting resin had a glass transition temperature (Tg) of 83°C, a melting point (Tm) of 255°C, and an amount of heat for crystal melting of 37 J/g.

PET-2: Using dimethyl terephthalate as an acid component and ethylene glycol as a diol component, germanium oxide (polymerization catalyst) was added 300 ppm (in terms of germanium atoms) to a polyester pellet to be obtained, followed by polycondensation reaction. Thus, a poly(ethylene terephthalate) pellet having an intrinsic viscosity of 0.54 was obtained. The resulting poly(ethylene terephthalate) was dried at 160°C for 6 hours for crystallization, followed by solid-phase polymerization at 220°C and a degree of vacuum of 0.3 Torr for 5 hours. Thus, poly(ethylene terephthalate) having an intrinsic viscosity of 0.70 was obtained. The resulting resin had a glass transition temperature (Tg) of 83°C, a melting point (Tm) of 255°C, and an amount of heat for crystal melting of 35 J/g.

PET-3: Poly(ethylene terephthalate) having an intrinsic viscosity of 0.80 was obtained in the same manner as in the section of PET-2 except that the duration of the solid-phase polymerization was 8 hours. The resulting resin had a glass transition temperature (Tg) of 83°C, a melting point (Tm) of 255°C, and an amount of heat for crystal melting of 36 J/g.

• Particle

Wollastonite-1: FPW#400 (manufactured by Kinsei Matec Co., Ltd.) was used, which was a needle-like particle having a length of 8.0 $\mu$m and an aspect ratio of 4.

Wollastonite-2: NYAD M1250 (manufactured by Tomoe Engineering Co., Ltd.) was used, which was a needle-like particle having a length of 12 $\mu$m and an aspect ratio of 3.

Needle-like titanium oxide: FTL-100 (manufactured by Ishihara Sangyo Kaisha, Ltd.) was used, which was a needle-like particle having a length of 1.7 $\mu$m and an aspect ratio of 13.

Boron nitride: SP3-7 (manufactured by Denki Kagaku Kogyo Kabushiki Kaisha) was used, which was a plate-like particle having a length of 2.0 $\mu$m and an aspect ratio of 19.

Talc: GH-7 (manufactured by Hayashi Kasei Co., Ltd.) was used, which was a plate-like particle having a length of 5.8 $\mu$m and an aspect ratio of 10.

Alumina: A4-42-2 (manufactured by Showa Denko K.K.) was used, which had a length of 5 $\mu$m, an amorphous shape, and an aspect ratio of 1.

The length (aspect ratio) of each particle contained in a polyester film (or a P layer scraped off from a laminate film) was determined by performing the following treatments (C1) to (C3) and then performing the following procedures (C4) to (C8). The length (aspect ratio) of each particle before added to the resin was determined by the procedures (C4) to (C8).

(C1) The polyester film (or the P layer scraped off from a laminate film) was dissolved in hexafluoro-2-isopropanol, and centrifugation was performed to fractionate insoluble components, which were particles.

(C2) The resulting particles were rinsed in hexafluoro-2-isopropanol, followed by centrifugation. The rinsing was repeated until a rinsing liquid yielded after centrifugation did not become cloudy by addition of ethanol.

(C3) The rinsing liquid in (C2) was heated and distilled, followed by air drying for 24 hours and then vacuum drying at a temperature of 60°C for 5 hours. Thus, particles were obtained, which were to be subjected to observation.

(C4) The particles were immobilized on an observation platform equipped with a 3D gauge for dimension measurement. Then, an image of the particles under 3000-time magnification was obtained using a scanning electron microscope.

(C5) Then, a single primary particle randomly selected from the image was subjected to image analysis on 3D measurement software. Thus, a circumscribing rectangular parallelepiped was drawn.

(C6) The size of the particle was measured with the longest side of the circumscribing rectangular parallelepiped being regarded as equivalent to the length (l) of the particle, the shortest side being regarded as equivalent to the thickness (t) of the particle, and the remaining side being regarded as equivalent to the width (b) of the particle. Thus, the shape of the particle was uniquely defined by a combination of these three values (1, t, b).

(C7) The procedures of (C5) and (C6) were performed for 500 randomly selected primary particles. Each of the three values, namely, the length (1), the thickness (t), and the width (b), was plotted to obtain a distribution curve. The abscissa of the distribution curve indicates the sizes ($\mu$m) of the particles, and the ordinate indicates the number (number) of the particles.

(C8) The position of the peak of each of the three distribution curves was identified, and the reading on the abscissa for the position was defined as the average length (lp), the average thickness (tp), or the average width (bp) of the particles. The ratio (lp/tp) of the average length to the average thickness was defined as the aspect ratio of the particles. If a single distribution curve had two or more peaks, it indicates that multiple types of particles different in shape coexisted. In such cases, the following procedures were performed: all possible particle shapes (combinations of lp, tp, and bp) conceivable from the peak positions were listed; each of the 500 primary particles subjected to size measurement was assigned to the most appropriate and closest particle shape among these possible particle shapes; particles assigned to the same particle shape were counted; it was regarded that a particle shape to which five or more particles were assigned was actually present; and the aspect ratio (lp/tp) of such a particle was calculated.

• Surface-treating agent

SC-1: Epoxy-group-containing silane coupling agent KBM-403 (manufactured by Shin-Etsu Chemical Co., Ltd.; compound name, 3-glycidoxypropyltrimethoxysilane; molecular weight, 236.3)

SC-2: Epoxy-group-containing silane coupling agent KBM-4803 (manufactured by Shin-Etsu Chemical Co., Ltd.; compound name, glycidoxyoctyltrimethoxysilane; molecular weight, 306.4)

(Reference Example 1-1)

Wollastonite-1 was placed in a Henschel mixer. To the wollastonite-1 while stirring, a silane coupling agent was sprayed at a rate of 0.1 mass% ($2.8 \times 10^{-6}$ mol/m$^2$ in terms of epoxy groups) relative to the total amount of the needle-like particle (b2) and the silane coupling agent being 100 mass%. After 2 hours of heating and stirring at 70°C, the needle-like particle (b2) having an epoxy group on the surface of the needle-like particle (b2) was taken out.

A vented twin screw co-rotating kneader-extruder (manufactured by the Japan Steel Works, Ltd.; screw diameter, 30 mm; (screw length)/(screw diameter) = 45.5) equipped with one or more side feeding ports and a single kneading-paddle kneading portion was heated to 265°C, and then 70 parts by mass of PET-1 as the crystalline polyester (A) was fed thereinto through a main feeding port and 30 parts by mass of the needle-like particle (b2) was fed thereinto through a side feeding port, followed by melt-kneading. The resulting melt-kneaded product was discharged in a form of a strand and cooled in water at a temperature of 25°C. Immediately after the cooling, the resulting strand was cut. Thus, a master pellet (MB-1-1) containing 30 mass% of the needle-like particle (b2) was prepared. Physical properties of the resulting master pellet are shown in Table 1.

(Reference Examples 1-2 to 1-4, 2-1 to 2-4, 3-1 to 3-4)

Master pellets (MB-1-2 to 1-4, 2-1 to 2-4, and 3-1 to 3-4) containing 30 mass% of the plate-like particle (b1) or the needle-like particle (b2) were prepared in the same manner as in Reference Example 1-1 except that the type of the particle, the type of the surface-treating agent, and the amount subjected to treatment were as specified in Table 1. Physical properties of the resulting master pellets are shown in Table 1.

(Reference Example 1-5)

A master pellet (MB-1-5) containing 30 mass% of the needle-like particle (b2) was prepared in the same manner as in Reference Example 1-1 except that the particle received no surface treatment. Physical properties of the resulting master pellet are shown in Table 1.

(Reference Example 3-5)

A master pellet (MB-3-5) containing 30 mass% of the particle was prepared in the same manner as in Reference Example 1-1 except that the particle was alumina and the amount subjected to treatment was as specified in Table 1. Physical properties of the resulting master pellet are shown in Table 1.

(Reference Example 4-1)

The master pellet (MB-1-3) prepared in Reference Example 1-3 was dried at 160°C for 6 hours for crystallization and then subjected to solid-phase polymerization at 220°C and a degree of vacuum of 0.3 Torr for 6 hours. Thus, a master pellet (MB-4-1) was prepared. Physical properties of the resulting master pellet are shown in Table 1.

(Reference Example 4-2)

The master pellet (MB-1-3) prepared in Reference Example 1-3 was dried at 160°C for 6 hours for crystallization and then subjected to solid-phase polymerization at 220°C and a degree of vacuum of 0.3 Torr for 12 hours. Thus, a master pellet (MB-4-2) was prepared. Physical properties of the resulting master pellet are shown in Table 1.

(Example 1)

A mixture of 66.7 parts by mass of the master pellet (MB-1-1) prepared in Reference Example 1-1 and 33.3 parts by mass of PET-1 was subjected to vacuum drying at a temperature of 180°C for 3 hours and then fed into an extruder for melting in a nitrogen atmosphere at a temperature of 280°C, followed by transfer to a T-die nozzle. The extruder was equipped with an 80-μm sintered filter. Through the T-die nozzle, the resulting mixture was extruded into a sheet form. The resulting melted monolayer sheet was made electrostatically adhered to and cooled on a drum the surface of which had been maintained at a temperature of 25°C, for solidification. Thus, a non-stretched monolayer film was obtained.
The resulting non-stretched monolayer film was preheated using rolls that were heated to a temperature of 85°C, and then stretched using a roll heated to a temperature of 90°C to a stretch factor of 2.5 in the longitudinal direction (length direction), followed by cooling using rolls at a temperature of 25°C. Thus, a uniaxially-stretched film was obtained. The resulting uniaxially-stretched film was held at both ends with clips and transferred to a preheating zone at a temperature of 80°C located in a tenter, immediately continuously followed by stretching in a heating zone at a temperature of 90°C to a stretch factor of 2.5 in a direction (width direction) orthogonal to the longitudinal direction. Subsequently, heat treatment was performed in a heat treatment zone 1 in the tenter at a temperature of 220°C for 20 seconds, then in a heat treatment zone 2 at a temperature of 150°C, and then in a heat treatment zone 3 at a temperature of 100°C. After the heat treatment in the heat treatment zone 1 and before the heat treatment in the heat treatment zone 2, 4% relaxing treatment was performed. Subsequently, slow and uniform cooling was performed, followed by winding. Thus, a biaxially-stretched film having a thickness of 50 μm was obtained.
Properties of the resulting film were evaluated, and the results are shown in Table 2. The results have proven that the film was excellent in thermal conductivity, mechanical properties, and heat resistance.

(Examples 2 to 20)

A polyester film having a thickness of 50 μm was obtained in the same manner as in Example 1 except that the type and the amount of the master pellet and the type and the amount of the crystalline polyester (A) were as specified in Table 2. Properties of the resulting film were evaluated, and the results are shown in Table 2. The results have proven that the film was excellent in thermal conductivity, mechanical properties, and heat resistance. The polyester films in Examples 4 to 7, 9 to 11, and 16 to 18, in particular, had excellent thermal conductivity compared to the polyester film in Example 1. Among these, each of the polyester films in Examples 11 and 16 had particularly excellent thermal conductivity.

(Example 21)

A mixture of 51.7 parts by mass of the master pellet (MB-1-2) prepared in Reference Example 1-2, 15.0 parts by mass of the master pellet (MB-3-4) prepared in Reference Example 3-4, and 33.3 parts by mass of PET-1 was subjected to vacuum drying at a temperature of 180°C for 3 hours and then fed into an extruder for melting in a nitrogen atmosphere at a temperature of 280°C, followed by transfer to a T-die nozzle. The rest of the procedures was performed in the same manner as in Example 1, and thus a polyester film having a thickness of 50 μm was obtained. Properties of the resulting film were evaluated, and the results are shown in Table 2. The results have proven that the film was excellent in thermal conductivity, mechanical properties, and heat resistance. It has been proven that the film obtained in Example 21 was excellent in thermal conductivity compared to the film obtained in Example 19 or 20.

(Examples 22 to 28)

A polyester film having a thickness of 50 $\mu$m was obtained in the same manner as in Example 21 except that the master pellet was used in the amount specified in Table 2. Properties of the resulting film were evaluated, and the results are shown in Table 2. The results have proven that the film was excellent in thermal conductivity, mechanical properties, and heat resistance. The polyester films in Examples 22 to 27, in particular, had excellent thermal conductivity compared to the polyester film in Example 28. Among these, each of the polyester films in Examples 22 to 25 had a particularly excellent thermal conductive rate.

(Comparative Examples 1 to 8)

A polyester film having a thickness of 50 $\mu$m was obtained in the same manner as in Example 1 except that the type and the amount of the master pellet, the type and the amount of the crystalline polyester (A), and the stretching conditions were as specified in Table 2. Properties of the resulting film were evaluated, and the results are shown in Table 2. The polyester films in Comparative Examples 1 to 3 and 5 to 8 had low thermal-conductivity and the polyester film in Comparative Example 4 had low heat-resistance compared to the polyester film in Example 1.
In the tables, exponents are abbreviated. For example, the expression 1.0E+05 means $1.0 \times 10^{-5}$.

[Table 1-1]

| | | | Ref. Ex. 1-1 | Ref. Ex. 1-2 | Ref. Ex. 1-3 | Ref. Ex. 1-4 | Ref. Ex. 1-5 |
|---|---|---|---|---|---|---|---|
| | | | MB-1-1 | MB-1-2 | MB-1-3 | MB-1-4 | MB-1-5 |
| Crystalline polyester (A) | Type | - | PET | PET | PET | PET | PET |
| | Amount | Parts by mass | 70 | 70 | 70 | 70 | 70 |
| Particle | Type | - | Wollastonite-1 | Wollastonite-1 | Wollastonite-1 | Wollastonite-1 | Wollastonite-1 |
| | Average length (1) | $\mu$m | 8.0 | 8.0 | 8.0 | 8.0 | 8.0 |
| | Aspect ratio (1/t) | - | 4 | 4 | 4 | 4 | 4 |
| | 1/b | - | 4 | 4 | 4 | 4 | 4 |
| | Surface treatment Type | - | SC-1 | SC-1 | SC-1 | SC-1 | - |
| | Surface treatment Amount treated | wt% | 0.1 | 0.5 | 1 | 2 | - |
| | Amount of reactive substituent (a) | $\times 10^{-6}$ mol/m$^2$ | 2.8 | 13.9 | 27.9 | 56.4 | 0 |
| | Amount | Parts by mass | 30 | 30 | 30 | 30 | 30 |
| Solid-phase polymerization | Time | hr | - | - | - | - | - |
| IV | | - | 0.60 | 0.60 | 0.62 | 0.63 | 0.58 |

EP 3 266 813 B1

[Table 1-2]

| | | | Ref. Ex. 2-1 | Ref. Ex. 2-2 | Ref. Ex. 2-3 | Ref. Ex. 2-4 |
|---|---|---|---|---|---|---|
| | | | MB-2-1 | MB-2-2 | MB-2-3 | MB-2-4 |
| Crystalline polyester (A) | Type | - | PET | PET | PET | PET |
| | Amount | Parts by mass | 70 | 70 | 70 | 70 |
| Particle | Type | | - | Wollastonite-1 | Wollastonite-1 | Wollastonite-1 | Wollastonite-1 |
| | Average length (1) | | $\mu$m | 8.0 | 8.0 | 8.0 | 8.0 |
| | Aspect ratio (l/t) | | - | 4 | 4 | 4 | 4 |
| | l/b | | - | 4 | 4 | 4 | 4 |
| | Surface treatment | Type | - | SC-2 | SC-2 | SC-2 | SC-2 |
| | | Amount treated | wt% | 0.1 | 0.5 | 1 | 2 |
| | Amount of reactive substituent (a) | | $\times 10^{-6}$ mol/m$^2$ | 2.1 | 10.7 | 21.5 | 43.5 |
| | Amount | | Parts by mass | 30 | 30 | 30 | 30 |
| Solid-phase polymerization | Time | hr | - | - | - | - |
| IV | | - | 0.60 | 0.60 | 0.62 | 0.63 |

[Table 1-3]

| | | | Ref. Ex. 3-1 | Ref. Ex. 3-2 | Ref. Ex. 3-3 | Ref. Ex. 3-4 | Ref. Ex. 3-5 | Ref. Ex. 4-1 | Ref. Ex. 4-2 |
|---|---|---|---|---|---|---|---|---|---|
| | | | MB-3-1 | MB-3-2 | MB-3-3 | MB-3-4 | MB-3-5 | MB-4-1 | MB-4-2 |
| Crystalline polyester (A) | Type | - | PET | PET | PET | PET | PET | PET | PET |
| | Amount | Parts by mass | 70 | 70 | 70 | 70 | 70 | 70 | 70 |
| Particle | Type | - | Talc | Wollastonite-2 | Needle-like titanium oxide | Boron nitride | Alumina | Wollastonite-1 | Wollastonite-1 |
| | Average length (l) | $\mu$m | 5.8 | 12.0 | 1.7 | 2.0 | 5.0 | 8.0 | 8.0 |
| | Aspect ratio (l/t) | - | 10 | 3 | 13 | 19 | 1 | 4 | 4 |
| | l/b | - | 1.2 | 3 | 12 | 18 | 1 | 4 | 4 |
| | Surface treatment — Type | - | SC-1 | SC-1 | SC-1 | SC-1 | SC-1 | SC-1 | SC-1 |
| | Surface treatment — Amount treated | wt% | 1 | 0.5 | 0.5 | 0.5 | 0.5 | 1 | 1 |
| | Amount of reactive substituent (a) | $\times 10^{-6}$ mol/m$^2$ | 27.9 | 14.5 | 25.4 | 22.6 | 14.0 | 27.9 | 27.9 |
| | Amount | Parts by mass | 30 | 30 | 30 | 30 | 30 | 30 | 30 |
| Solid-phase polymerization | Time | hr | - | - | - | - | - | 6 | 12 |
| IV | | - | 0.62 | 0.60 | 0.61 | 0.61 | 0.58 | 0.76 | 0.87 |

24

[Table 2-1]

| | | | | Ex. 1 | Ex. 2 | Ex. 3 | Ex. 4 | Ex. 5 | Ex. 6 | Ex. 7 |
|---|---|---|---|---|---|---|---|---|---|---|
| Production conditions | Raw material | PET | Type | - | PET-1 | PET-1 | PET-1 | PET-1 | PET-1 | PET-1 | PET-1 |
| | | | Amount | Parts by mass | 66.7 | 66.7 | 66.7 | 66.7 | 50.0 | 33.3 | 16.7 |
| | | Master pellet (1) | Type | - | MB-1-1 | MB-1-2 | MB-1-3 | MB-1-4 | MB-1-3 | MB-1-3 | MB-1-3 |
| | | | Amount | Parts by mass | 33.3 | 33.3 | 33.3 | 33.3 | 50.0 | 66.7 | 83.3 |
| | | Master pellet (2) | Type | - | - | - | - | - | - | - | - |
| | | | Amount | Parts by mass | - | - | - | - | - | - | - |
| | Stretching | Vertical stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |
| | | Transverse stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |

| | | | Ex. 1 | Ex. 2 | Ex. 3 | Ex. 4 | Ex. 5 | Ex. 6 | Ex. 7 |
|---|---|---|---|---|---|---|---|---|---|
| Physical properties of film | Aspect ratio of plate-shaped particle (b1) | - | - | - | - | - | - | - | - |
| | Content (Wb1) of plate-shaped particle (b1) | Mass% | - | - | - | - | - | - | - |
| | Aspect ratio of needle-shaped particle (b2) | - | 4 | 4 | 4 | 4 | 4 | 4 | 4 |
| | Content (Wb2) of needle-shaped particle (b2) | Mass% | 10 | 10 | 10 | 10 | 15 | 20 | 25 |
| | Wb | Mass% | 10 | 10 | 10 | 10 | 15 | 20 | 25 |
| | V | Volume% | 6.2 | 4.2 | 3.1 | 2.1 | 5.5 | 8 | 12 |
| | V/Wb | - | 0.62 | 0.42 | 0.31 | 0.21 | 0.37 | 0.40 | 0.48 |
| | Wb2/Wb1 | - | - | - | - | - | - | - | - |
| | IV | - | 0.59 | 0.59 | 0.60 | 0.60 | 0.58 | 0.55 | 0.53 |
| | $\Delta Tcg$ | °C | 43.5 | 43.6 | 43.7 | 43.7 | 43.1 | 42.8 | 42.3 |
| | Young's modulus | GPa | 4.0 | 4.0 | 4.0 | 3.9 | 4.3 | 4.5 | 4.6 |
| | Elongation at break | % | 75 | 85 | 85 | 65 | 50 | 20 | 20 |
| | Thermal conductive rate | W/mK | 0.16 | 0.17 | 0.18 | 0.20 | 0.20 | 0.21 | 0.22 |
| | Dynamic storage elastic modulus | Pa | 2.2E+09 | 2.2E+09 | 2.2E+09 | 2.1E+09 | 2.7E+09 | 3.0E+09 | 3.2E+09 |
| | Heat resistance | - | A | A | A | A | A | A | A |
| | Surface specific resistance | - | A | A | A | A | A | A | A |

[Table 2-2]

| | | | | Ex. 8 | Ex. 9 | Ex. 10 | Ex. 11 | Ex. 12 | Ex. 13 | Ex. 14 |
|---|---|---|---|---|---|---|---|---|---|---|
| Production conditions | Raw material | PET | Type | - | PET-1 | PET-1 | PET-1 | PET-1 | PET-1 | PET-1 | PET-1 |
| | | | Amount | Parts by mass | 33.3 | 33.3 | 33.3 | 33.3 | 66.7 | 50.0 | 33.3 |
| | | Master pellet (1) | Type | - | MB-2-1 | MB-2-2 | MB-2-3 | MB-2-4 | MB-3-1 | MB-3-1 | MB-3-1 |
| | | | Amount | Parts by mass | 66.7 | 66.7 | 66.7 | 66.7 | 33.3 | 50.0 | 66.7 |
| | | Master pellet (2) | Type | - | - | - | - | - | - | - | - |
| | | | Amount | Parts by mass | - | - | - | - | - | - | - |
| | Stretching | Vertical stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |
| | | Transverse stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |

(continued)

| Physical properties of film | | | Ex. 8 | Ex. 9 | Ex. 10 | Ex. 11 | Ex. 12 | Ex. 13 | Ex. 14 |
|---|---|---|---|---|---|---|---|---|---|
| | Aspect ratio of plate-shaped particle (b1) | - | - | - | - | - | 10 | 10 | 10 |
| | Content (Wb1) of plate-shaped particle (b1) | Mass% | - | - | - | - | 10 | 15 | 20 |
| | Aspect ratio of needle-shaped particle (b2) | - | 4 | 4 | 4 | 4 | - | - | - |
| | Content (Wb2) of needle-shaped particle (b2) | Mass% | 20 | 20 | 20 | 20 | - | - | - |
| | Wb | Mass% | 20 | 20 | 20 | 20 | 10 | 15 | 20 |
| | V | Volume% | 11 | 8 | 6 | 4 | 4.1 | 6.5 | 9 |
| | V/Wb | - | 0.55 | 0.40 | 0.30 | 0.20 | 0.41 | 0.43 | 0.45 |
| | Wb2/Wb1 | - | - | - | - | - | - | - | - |
| | IV | - | 0.53 | 0.54 | 0.55 | 0.55 | 0.60 | 0.58 | 0.55 |
| | $\Delta Tcg$ | °C | 42.4 | 42.5 | 42.7 | 42.7 | 43.7 | 43.1 | 42.8 |
| | Young's modulus | GPa | 4.7 | 4.7 | 4.7 | 4.6 | 4.0 | 4.3 | 4.5 |
| | Elongation at break | % | 20 | 25 | 25 | 20 | 85 | 50 | 20 |
| | Thermal conductive rate | W/mK | 0.18 | 0.21 | 0.22 | 0.26 | 0.16 | 0.18 | 0.19 |
| | Dynamic storage elastic modulus | Pa | 3.4E+09 | 3.4E+09 | 3.4E+09 | 3.2E+09 | 2.2E+09 | 2.7E+09 | 3.0E+09 |
| | Heat resistance | - | A | A | A | A | A | A | A |
| | Surface specific resistance | - | A | A | A | A | A | A | A |

[Table 2-3]

| | | | | Ex. 15 | Ex. 16 | Ex. 17 | Ex. 18 | Ex. 19 | Ex. 20 | Ex. 21 |
|---|---|---|---|---|---|---|---|---|---|---|
| Production conditions | Raw material | PET | Type | - | PET-1 | PET-1 | PET-2 | PET-3 | PET-1 | PET-1 | PET-1 |
| | | | Amount | Parts by mass | 66.7 | 33.3 | 33.3 | 33.3 | 33.3 | 33.3 | 33.3 |
| | | Master pellet (1) | Type | - | MB-3-2 | MB-3-3 | MB-4-1 | MB-4-2 | MB-1-2 | MB-3-4 | MB-3-4 |
| | | | Amount | Parts by mass | 33.3 | 66.7 | 66.7 | 66.7 | 66.7 | 66.7 | 15.0 |
| | | Master pellet (2) | Type | - | - | - | - | - | - | - | MB-1-2 |
| | | | Amount | Parts by mass | - | - | - | - | - | - | 51.7 |
| | Stretching | Vertical stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |
| | | Transverse stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |

29

(continued)

| Physical properties of film | | | Ex. 15 | Ex. 16 | Ex. 17 | Ex. 18 | Ex. 19 | Ex. 20 | Ex. 21 |
|---|---|---|---|---|---|---|---|---|---|
| | Aspect ratio of plate-shaped particle (b1) | - | - | - | - | - | - | 19 | 19 |
| | Content (Wb1) of plate-shaped particle (b1) | Mass% | - | - | - | - | - | 20.0 | 4.5 |
| | Aspect ratio of needle-shaped particle (b2) | - | 3 | 10 | 4 | 4 | 4 | - | 4 |
| | Content (Wb2) of needle-shaped particle (b2) | Mass% | 10 | 20 | 20 | 20 | 20.0 | - | 15.5 |
| | Wb | Mass% | 10 | 20 | 20 | 20 | 20.0 | 20.0 | 20 |
| | V | Volume% | 4.7 | 6.5 | 5 | 4 | 10 | 11 | 9 |
| | V/Wb | - | 0.47 | 0.33 | 0.25 | 0.20 | 0.50 | 0.55 | 0.45 |
| | Wb2/Wb1 | - | - | - | - | - | - | - | 3.4 |
| | IV | - | 0.59 | 0.55 | 0.64 | 0.69 | 0.54 | 0.53 | 0.54 |
| | ∆Tcg | °C | 43.6 | 43.2 | 45.2 | 46.2 | 42.6 | 42.3 | 42.7 |
| | Young's modulus | GPa | 3.9 | 4.7 | 4.6 | 4.7 | 4.5 | 4.4 | 4.5 |
| | Elongation at break | % | 85 | 15 | 25 | 30 | 20 | 15 | 20 |
| | Thermal conductive rate | W/mK | 0.16 | 0.29 | 0.22 | 0.23 | 0.19 | 0.18 | 0.28 |
| | Dynamic storage elastic modulus | Pa | 2.1E+09 | 3.4E+09 | 3.2E+09 | 3.4E+09 | 3.0E+09 | 2.8E+09 | 3.0E+09 |
| | Heat resistance | - | A | A | A | A | A | A | A |
| | Surface specific resistance | - | A | A | A | A | A | A | A |

[Table 2-4]

| | | | | | Ex. 22 | Ex. 23 | Ex. 24 | Ex. 25 | Ex. 26 | Ex. 27 | Ex. 28 |
|---|---|---|---|---|---|---|---|---|---|---|---|
| Production conditions | Raw material | PET | Type | - | PET-1 | PET-1 | PET-1 | PET-1 | PET-1 | PET-1 | PET-1 |
| | | | Amount | Parts by mass | 33.3 | 33.3 | 33.3 | 33.3 | 33.3 | 33.3 | 70.0 |
| | | Master pellet (1) | Type | - | MB-3-4 | MB-3-4 | MB-3-4 | MB-3-4 | MB-3-4 | MB-3-4 | MB-3-4 |
| | | | Amount | Parts by mass | 7.3 | 8.2 | 36.7 | 30.3 | 6.4 | 46.7 | 6.8 |
| | | Master pellet (2) | Type | - | MB-1-2 | MB-1-2 | MB-1-2 | MB-1-2 | MB-1-2 | MB-1-2 | MB-1-2 |
| | | | Amount | Parts by mass | 59.4 | 58.5 | 30.0 | 36.4 | 60.4 | 20.0 | 23.2 |
| | Stretching | Vertical stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |
| | | Transverse stretching | Temperature | °C | 90 | 90 | 90 | 90 | 90 | 90 | 90 |
| | | | Stretching factor | Times | 2.5 | 2.5 | 2.5 | 2.5 | 2.5 | 2.5 | 2.5 |

EP 3 266 813 B1

31

(continued)

| | | Ex. 22 | Ex. 23 | Ex. 24 | Ex. 25 | Ex. 26 | Ex. 27 | Ex. 28 |
|---|---|---|---|---|---|---|---|---|
| Aspect ratio of plate-shaped particle (b1) | - | 19 | 19 | 19 | 19 | 19 | 19 | 19 |
| Content (Wb1) of plate-shaped particle (b1) | Mass% | 2.2 | 2.5 | 11.0 | 9.1 | 1.9 | 14.0 | 2.0 |
| Aspect ratio of needle-shaped particle (b2) | - | 4 | 4 | 4 | 4 | 4 | 4 | 4 |
| Content (Wb2) of needle-shaped particle (b2) | Mass% | 17.8 | 17.6 | 9.0 | 10.9 | 18.1 | 6.0 | 7.0 |
| Wb | Mass% | 20 | 20 | 20 | 20 | 20 | 20 | 9.0 |
| V | Volume% | 9.5 | 9.5 | 9.5 | 9.5 | 10 | 10 | 5.5 |
| V/Wb | - | 0.47 | 0.47 | 0.47 | 0.47 | 0.50 | 0.50 | 0.61 |
| Wb2/Wb1 | - | 8.1 | 7.1 | 0.8 | 1.2 | 9.5 | 0.4 | 3.4 |
| IV | - | 0.54 | 0.54 | 0.54 | 0.54 | 0.54 | 0.54 | 0.62 |
| $\triangle$Tcg | °C | 42.6 | 42.7 | 42.6 | 42.6 | 42.6 | 42.5 | 43.7 |
| Physical properties of film — Young's modulus | GPa | 4.5 | 4.5 | 4.5 | 4.5 | 4.5 | 4.5 | 3.8 |
| Elongation at break | % | 20 | 20 | 20 | 20 | 20 | 15 | 90 |
| Thermal conductive rate | W/mK | 0.25 | 0.26 | 0.25 | 0.26 | 0.22 | 0.21 | 0.18 |
| Dynamic storage elastic modulus | Pa | 3.0E+09 | 3.0E+09 | 3.0E+09 | 3.0E+09 | 3.0E+09 | 3.0E+09 | 1.9E+09 |
| Heat resistance | - | A | A | A | A | A | A | A |
| Surface specific resistance | - | A | A | A | A | A | A | A |

[Table 2-5]

| | | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|
| Production conditions | Raw material | PET | Type | - | PET-1 | PET-1 | PET-1 | PET-1 | PET-1 | PET-1 | PET-1 | PET-1 |
| | | | Amount | Parts by mass | 100.0 | 66.7 | 33.3 | 33.3 | 66.7 | 66.7 | 66.7 | 66.7 |
| | | Master pellet (1) | Type | - | - | MB-1-5 | MB-1-5 | MB-1-2 | MB-1-2 | MB-1-3 | MB-1-4 | MB-3-5 |
| | | | Amount | Parts by mass | 0 | 33.3 | 66.7 | 66.7 | 33.3 | 33.3 | 33.3 | 33.3 |
| | | Master pellet (2) | Type | - | - | - | - | - | - | - | - | - |
| | | | Amount | Parts by mass | 0 | - | - | - | - | - | - | - |
| | Stretching | Vertical stretching | Temperature | °C | 90 | 90 | 90 | - | 90 | 90 | 90 | 90 |
| | | | Stretching factor | Times | 2.5 | 2.5 | 2.5 | - | 2.5 | 2.5 | 2.5 | 2.5 |
| | | Transverse stretching | Temperature | °C | 90 | 90 | 90 | - | 90 | 90 | 90 | 90 |
| | | | Stretching factor | Times | 2.5 | 2.5 | 2.5 | - | 2.5 | 2.5 | 2.5 | 2.5 |

(continued)

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Physical properties of film | Aspect ratio of plate-shaped particle (b1) | - | - | - | - | - | - | - | - | - |
| | Content (Wb1) of plate-shaped particle (b1) | Mass% | - | - | - | - | - | - | - | - |
| | Aspect ratio of needle-shaped particle (b2) | - | - | 4 | 4 | 4 | 4 | 4 | 4 | 1 |
| | Content (Wb2) of needle-shaped particle (b2) | Mass% | - | 10 | 20 | 20 | 8 | 8 | 8 | 10 |
| | Wb | Mass% | - | 10 | 20 | 20 | 8 | 8 | 8 | 10 |
| | V | Volume% | 0 | 11 | 23 | 0.4 | 5 | 4 | 4 | 4 |
| | V/Wb | - | - | 1.10 | 1.15 | 0.02 | 0.63 | 0.50 | 0.50 | 0.40 |
| | Wb2/Wb1 | - | - | - | - | - | - | - | - | - |
| | IV | - | 0.60 | 0.50 | 0.48 | 0.60 | 0.60 | 0.60 | 0.61 | 0.61 |
| | ∆Tcg | °C | 63 | 40.5 | 40 | 43.7 | 43.7 | 43.8 | 43.9 | 43.1 |
| | Young's modulus | GPa | 3.5 | 3.7 | 3.9 | 1.8 | 3.8 | 3.8 | 3.8 | 3.7 |
| | Elongation at break | % | 120 | 50 | 8 | 150 | 20 | 90 | 90 | 90 |
| | Thermal conductive rate | W/mK | 0.13 | 0.13 | 0.13 | 0.20 | 0.13 | 0.13 | 0.13 | 0.13 |
| | Dynamic storage elastic modulus | Pa | 1.5E+09 | 1.8E+09 | 2.1E+09 | 2.0E+07 | 1.9E+09 | 1.9E+09 | 1.9E+09 | 1.8E+09 |
| | Heat resistance | - | A | A | A | D | A | A | A | A |
| | Surface specific resistance | - | A | A | A | A | A | A | A | A |

INDUSTRIAL APPLICABILITY

The present invention can provide a polyester film that is excellent in electrical insulating properties, thermal conductivity, and mechanical properties compared to conventional polyester films. The polyester film of the present invention can be suitably used in applications where electrical insulating properties and thermal conductivity are both important, namely, applications including electrical insulating materials such as copper-clad laminates, solar-cell back sheets, adhesive tape, flexible printed boards, membrane switches, heating element sheets, and flat cables as well as capacitor materials, automobile materials, and building materials. More specifically, the polyester film of the present invention can be used to provide highly efficient wind power generators and solar cells and low-power-consuming small electronic devices.

DESCRIPTION OF REFERENCE SIGNS

1: Length (1)
2: Width (b)
3: Thickness (t)

**Claims**

1. A polyester film provided with a layer (a P layer) that contains a crystalline polyester (A) and also contains plate-like particles (b1) each having an aspect ratio of 2 or more and/or needle-like particles (b2) each having an aspect ratio of 2 or more, wherein the plate-like particle (b1) having an aspect ratio of 2 or more and the needle-like particle (b2) having an aspect ratio of 2 or more are collectively called particle (B), wherein the crystalline polyester (A) is a polyester containing a dicarboxylic acid constituent and a diol constituent as main constituents, and is also a resin having a $\Delta$Hm value (amount of heat for crystal melting) of not lower than 15 J/g, the P layer is stretched in at least one axial direction and the Young's modulus of the polyester film is 2 GPa or more and the values of Wb and V/Wb are 10 or more and 1 or less, respectively, wherein Wb (% by mass) represents the total content of the plate-like particles (b1) each having an aspect ratio of 2 or more and the needle-like particles (b2) each having an aspect ratio of 2 or more in the P layer, and V (% by volume) represents the porosity in the P layer, wherein the plate-like particle (b1) having an aspect ratio of 2 or more and the needle-like particle (b2) having an aspect ratio of 2 or more have on their surfaces a substituent reactive with the crystalline polyester (A) (hereinafter, the substituent is called reactive substituent (a)), and the amount of the reactive substituent (a) on a unit surface area of the particle (B) is not smaller than $0.2 \times 10^{-6}$ mol/m$^2$ and not greater than $1.4 \times 10^{-4}$ mol/m$^2$.

2. The polyester film according to claim 1, wherein the P layer comprises both the plate-like particle (b1) having an aspect ratio of 2 or more and the needle-like particle (b2) having an aspect ratio of 2 or more, and a Wb2/Wb1 value is not smaller than 0.7 and not greater than 9, with the content of the plate-like particle (b1) having an aspect ratio of 2 or more in the P layer being Wb1 (% by mass) and the content of the needle-like particle (b2) having an aspect ratio of 2 or more in the P layer being Wb2 (% by mass).

3. The polyester film according to any one of claims 1 to 2, wherein the elongation at break of the polyester film is not lower than 10%.

4. The polyester film according to any one of claims 1 to 3, wherein a difference ($\Delta$Tcg) between a glass transition temperature (Tg) of the P layer and a cold crystallization peak top temperature (Tcc) of the P layer is not lower than 44°C.

5. The polyester film according to claims 1 to 4, wherein a dynamic storage elastic modulus (E') at 100°C determined by dynamic viscoelasticity measurement (hereinafter, called DMA) at a frequency of 1 Hz is not smaller than $5 \times 10^7$ Pa.

6. The polyester film according to any one of claims 1 to 5, wherein the polyester film has a thermal conductive rate in a film thickness direction of not lower than 0.15 W/mK and a surface specific resistance of not lower than $10^{13}$ $\Omega$/□.

7. An electrical insulation sheet comprising the polyester film as claimed in any one of claims 1 to 6.

8. A wind power generator comprising the electrical insulation sheet as claimed in claim 7.

9. An adhesive tape comprising the polyester film as claimed in any one of claims 1 to 6.

10. A method for producing the polyester film as claimed in any one of claims 1 to 6, the method comprising, in sequence:

melt-kneading a crystalline polyester (A) with at least one of a plate-like particle (b1) having an aspect ratio of 2 or more and having a substituent reactive with the crystalline polyester (A) (hereinafter, the substituent is called reactive substituent (a)) on a surface and a needle-like particle (b2) having an aspect ratio of 2 or more and having the reactive substituent (a) on a surface, wherein the plate-like particle (b1) having an aspect ratio of 2 or more and the needle-like particle (b2) having an aspect ratio of 2 or more are collectively called particle (B) (hereinafter, the step is called melt-kneading step);

melting the resulting resin composition comprising the crystalline polyester (A) and the at least one particle and discharging the resulting resin composition through a nozzle to obtain a film (hereinafter, the step is called melt-extruding step); and

biaxially stretching the resulting film (hereinafter, the step is called stretching step).

11. The method for producing the polyester film according to claim 10, wherein the amount of the reactive substituent (a) on a unit surface area of the at least one of the plate-like particle (b1) having an aspect ratio of 2 or more and the needle-like particle (b2) having an aspect ratio of 2 or more is not smaller than $0.2 \times 10^{-6}$ mol/m$^2$ and not greater than $1.4 \times 10^{-4}$ mol/m$^2$.

12. The method for producing the polyester film according to claim 10 or 11, wherein the at least one of the plate-like particle (b1) having an aspect ratio of 2 or more and the needle-like particle (b2) having an aspect ratio of 2 or more has been treated with a surface-treating agent containing the reactive substituent (a), and the proportion (by mass) of the surface-treating agent is not lower than 0.1 parts by mass and not higher than 5 parts by mass relative to the mass of the particle (B) being defined as 100 parts by mass.

13. The method for producing the polyester film according to any one of claims 10 to 12, wherein the melt-kneading step yields a chip-like composition, then the resulting chip-like composition is subjected to solid-phase polymerization, and then the resultant is melted and subjected to film formation in the melt-extruding step.

**Patentansprüche**

1. Polyesterfolie, die mit einer Schicht (einer P-Schicht) versehen ist, die einen kristallinen Polyester (A) enthält und auch plattenartige Partikel (b1), die jeweils ein Aspektverhältnis von 2 oder mehr aufweisen, und/oder nadelartige Partikel (b2) enthält, die jeweils ein Aspektverhältnis von 2 oder mehr aufweisen, wobei die plattenartigen Partikel (b1), die ein Aspektverhältnis von 2 oder mehr aufweisen, und die nadelartigen Partikel (b2), die ein Aspektverhältnis von 2 oder mehr aufweisen, zusammenfassend als Partikel (B) bezeichnet werden, wobei der kristalline Polyester (A) ein Polyester ist, der einen Dicarbonsäurebestandteil und einen Diolbestandteil als Hauptbestandteile enthält, und auch ein Harz ist, das einen $\Delta$Hm-Wert (Wärmemenge zum Kristallschmelzen) von nicht weniger als 15 J/g aufweist, wobei die P-Schicht in mindestens einer axialen Richtung gestreckt ist und der Youngsche Modul der Polyesterfolie 2 GPa oder mehr beträgt und die Werte von Wb und V/Wb 10 oder mehr beziehungsweise 1 oder weniger betragen, wobei Wb (Masse-%) den Gesamtgehalt der plattenartigen Partikel (b1), die jeweils ein Aspektverhältnis von 2 oder mehr aufweisen, und der nadelartigen Partikel (b2), die jeweils ein Aspektverhältnis von 2 oder mehr aufweisen, in der P-Schicht repräsentiert, und V (Volumen-%) die Porosität in der P-Schicht repräsentiert, wobei der plattenartige Partikel (b1), der ein Aspektverhältnis von 2 oder mehr aufweist, und der nadelartige Partikel (b2), der ein Aspektverhältnis von 2 oder mehr aufweist, auf ihren Oberflächen einen Substituenten aufweisen, der mit dem kristallinen Polyester (A) reaktiv ist (nachstehend wird der Substituent als reaktiver Substituent (a) bezeichnet), und die Menge des reaktiven Substituenten (a) auf einem Einheitsoberflächenbereich des Partikels (B) nicht kleiner als $0,2 \times 10^{-6}$ mol/m$^2$ und nicht größer als $1,4 \times 10^{-4}$ mol/m$^2$ ist.

2. Polyesterfolie nach Anspruch 1, wobei die P-Schicht sowohl den plattenartigen Partikel (b1), der ein Aspektverhältnis von 2 oder mehr aufweist, als auch den nadelartigen Partikel (b2), der ein Aspektverhältnis von 2 oder mehr aufweist, umfasst und ein Wb2/Wb1-Wert nicht kleiner als 0,7 und nicht größer als 9 ist, wobei der Gehalt des plattenartigen Partikels (b1), der ein Aspektverhältnis von 2 oder mehr aufweist, in der P-Schicht Wb1 (Masse-%) und der Gehalt des nadelartigen Partikels (b2), der ein Aspektverhältnis von 2 oder mehr aufweist, in der P-Schicht Wb2 (Masse-%) ist.

3. Polyesterfolie nach einem der Ansprüche 1 bis 2, wobei die Bruchdehnung der Polyesterfolie nicht niedriger als 10 % ist.

4. Polyesterfolie nach einem der Ansprüche 1 bis 3, wobei eine Differenz xxxxxxxx($\Delta$Tcg) zwischen einer Glasübergangstemperatur (Tg) der P-Schicht und einer Kaltkristallisationsmaximaltemperatur (Tcc) der P-Schicht nicht niedriger als 44 °C ist.

5. Polyesterfolie nach den Ansprüchen 1 bis 4, wobei ein dynamischer Speicherelastizitätsmodul (E') bei 100 °C, bestimmt durch dynamische Viskoelastizitätsmessung (im Folgenden mit DMA bezeichnet) bei einer Frequenz von 1 Hz, nicht kleiner als $5 \times 10^7$ Pa ist.

6. Polyesterfolie nach einem der Ansprüche 1 bis 5, wobei die Polyesterfolie eine Wärmeleitfähigkeit in Foliendickenrichtung von nicht weniger als 0,15 W/mK und einen spezifischen Oberflächenwiderstand von nicht weniger als $10^{13}$ $\Omega$/□ aufweist.

7. Elektroisolierfilm, umfassend die Polyesterfolie nach einem der Ansprüche 1 bis 6.

8. Windkraftgenerator, umfassend den Elektroisolierfilm nach Anspruch 7.

9. Klebeband, umfassend die Polyesterfolie nach einem der Ansprüche 1 bis 6.

10. Verfahren zum Herstellen der Polyesterfolie nach einem der Ansprüche 1 bis 6, wobei das Verfahren der Reihe nach das Folgende umfasst:

Schmelzkneten von einem kristallinen Polyester (A) mit mindestens einem von einem plattenartigen Partikel (b1), der ein Aspektverhältnis von 2 oder mehr und auf einer Oberfläche einen Substituenten aufweist, der mit dem kristallinen Polyester (A) reaktiv ist (nachstehend wird der Substituent als reaktiver Substituent (a) bezeichnet), und einem nadelartigen Partikel (b2), der ein Aspektverhältnis von 2 oder mehr und auf einer Oberfläche einen reaktiven Substituenten (a) aufweist, wobei der plattenartige Partikel (b1), der ein Aspektverhältnis von 2 oder mehr aufweist, und der nadelartige Partikel (b2), der ein Aspektverhältnis von 2 oder mehr aufweist, zusammenfassend als Partikel (B) bezeichnet werden (nachfolgend wird der Schritt als Schmelzknetschritt bezeichnet);
Schmelzen von der resultierenden Harzzusammensetzung, umfassend den kristallinen Polyester (A) und den mindestens einen Partikel, und Entlassen der resultierenden Harzzusammensetzung durch eine Düse, um eine Folie zu erhalten (nachfolgend wird der Schritt als Schmelzextrudierschritt bezeichnet); und
biaxiales Strecken von der resultierenden Folie (nachfolgend wird der Schritt als Streckschritt bezeichnet).

11. Verfahren zum Herstellen der Polyesterfolie nach Anspruch 10, wobei die Menge des reaktiven Substituenten (a) auf einem Einheitsoberflächenbereich von dem mindestens einen von dem plattenartigen Partikel (b1), der ein Aspektverhältnis von 2 oder mehr aufweist, und dem nadelartigen Partikel (b2), der ein Aspektverhältnis von 2 oder mehr aufweist, nicht kleiner als $0,2 \times 10^{-6}$ mol/m$^2$ und nicht größer als $1,4 \times 10^{-4}$ mol/m$^2$ ist.

12. Verfahren zum Herstellen der Polyesterfolie nach Anspruch 10 oder 11, wobei der mindestens eine von dem plattenartigen Partikel (b1), der ein Aspektverhältnis von 2 oder mehr aufweist, und dem nadelartigen Partikel (b2), der ein Aspektverhältnis von 2 oder mehr aufweist, mit einem Oberflächenbehandlungsmittel behandelt wurde, das den reaktiven Substituenten (a) enthält, und wobei der Anteil (bezogen auf die Masse) des Oberflächenbehandlungsmittels nicht niedriger als 0,1 Massenanteile und nicht höher als 5 Massenanteile ist, bezogen auf die Masse des Partikels (B), die als 100 Massenanteile definiert ist.

13. Verfahren zum Herstellen der Polyesterfolie nach einem der Ansprüche 10 bis 12, wobei der Schmelzknetschritt eine chipartige Zusammensetzung ergibt, wobei dann die resultierende chipartige Zusammensetzung einer Festphasenpolymerisation unterzogen wird und dann das Resultat geschmolzen und in dem Schmelzextrudierschritt einer Folienbildung unterzogen wird.

**Revendications**

1. Film de polyester pourvu d'une couche (une couche P) qui contient un polyester cristallin (A) et contient en outre des particules en forme de plaque (b1) ayant chacune un facteur de forme de 2 ou plus et/ou des particules en forme d'aiguille (b2) ayant chacune un facteur de forme de 2 ou plus, dans lequel la particule en forme de plaque (b1) ayant un facteur de forme de 2 ou plus et la particule en forme d'aiguille (b2) ayant un facteur de forme de 2 ou plus sont collectivement appelées particule (B), dans lequel le polyester cristallin (A) est un polyester contenant un constituant acide dicarboxylique et un constituant diol en tant que constituants principaux, et est en outre une résine ayant une valeur ΔHm (quantité de chaleur pour la fusion de cristaux) de pas moins de 15 J/g, la couche P est étirée dans au moins une direction axiale et le module d'élasticité du film de polyester est de 2 GPa ou plus et les valeurs de Wb et V/Wb sont de 10 ou plus et 1 ou moins, respectivement, dans lequel Wb (% en masse) représente la teneur totale des particules en forme de plaque (b1) ayant chacune un facteur de forme de 2 ou plus et les particules en forme d'aiguille (b2) ayant chacune un facteur de forme de 2 ou plus dans la couche P, et V (% en volume) représente la porosité dans la couche P, dans lequel la particule en forme de plaque (b1) ayant un facteur de forme de 2 ou plus et la particule en forme d'aiguille (b2) ayant un facteur de forme de 2 ou plus comportent, sur leurs surfaces, un substituant réactif avec le polyester cristallin (A) (ci-après, le substituant est appelé substituant réactif (a)), et la quantité du substituant réactif (a) sur une surface unitaire de la particule (B) n'est pas inférieure à $0,2 \times 10^{-6}$ mol/m$^2$ et pas supérieure à $1,4 \times 10^{-4}$ mol/m$^2$.

2. Film de polyester selon la revendication 1, dans lequel la couche P comprend à la fois la particule en forme de plaque (b1) ayant un facteur de forme de 2 ou plus et la particule en forme d'aiguille (b2) ayant un facteur de forme de 2 ou plus, et une valeur Wb2/Wb1 n'est pas inférieure à 0,7 et pas supérieure à 9, la teneur de la particule en forme de plaque (b1) ayant un facteur de forme de 2 ou plus dans la couche P étant Wb1 (% en masse) et la teneur de la particule en forme d'aiguille (b2) ayant un facteur de forme de 2 ou plus dans la couche P étant Wb2 (% en masse).

3. Film de polyester selon l'une quelconque des revendications 1 à 2, dans lequel l'allongement à la rupture du film de polyester n'est pas inférieur à 10 %.

4. Film de polyester selon l'une quelconque des revendications 1 à 3, dans lequel une différence (ΔTcg) entre une température de transition vitreuse (Tg) de la couche P et une température maximale de pic de cristallisation (Tcc) de la couche P n'est pas inférieure à 44 °C.

5. Film de polyester selon les revendications 1 à 4, dans lequel un module d'élasticité de conservation dynamique (E') à 100 °C, déterminé par mesure de viscoélasticité dynamique (ci-après, appelé DMA) à une fréquence de 1 Hz n'est pas inférieur à $5 \times 10^7$ Pa.

6. Film de polyester selon l'une quelconque des revendications 1 à 5, le film de polyester ayant un taux thermoconducteur dans une direction d'épaisseur de film d'au moins 0,15 W/mK et une résistance superficielle spécifique d'au moins $10^{13}$ Ω/.

7. Feuille d'isolation électrique comprenant le film de polyester selon l'une quelconque des revendications 1 à 6.

8. Générateur d'électricité éolienne comprenant la feuille d'isolation électrique selon la revendication 7.

9. Bande adhésive comprenant le film de polyester selon l'une quelconque des revendications 1 à 6.

10. Procédé de production du film de polyester selon l'une quelconque des revendications 1 à 6, le procédé comprenant, en séquence :

   le malaxage à l'état fondu d'un polyester cristallin (A) avec au moins l'un parmi une particule en forme de plaque (b1) ayant un facteur de forme de 2 ou plus et comportant un substituant réactif avec le polyester cristallin (A) (ci-après, le substituant est appelé substituant réactif (a)) sur une surface et une particule en forme d'aiguille (b2) ayant un facteur de forme de 2 ou plus et comportant le substituant réactif (a) sur une surface, dans lequel la particule en forme de plaque (b1) ayant un facteur de forme de 2 ou plus et la particule en forme d'aiguille (b2) ayant un facteur de forme de 2 ou plus sont collectivement appelées particule (B) (ci-après, l'étape est appelée étape de malaxage à l'état fondu) ;
   la fusion de la composition de résine résultante comprenant le polyester cristallin (A) et l'au moins une particule et l'évacuation de la composition de résine résultante à travers une buse pour obtenir un film (ci-après, l'étape est appelée étape d'extrusion à l'état fondu) ; et

l'étirage biaxial du film résultant (ci-après, l'étape est appelée étape d'étirage).

11. Procédé de production du film de polyester selon la revendication 10, dans lequel la quantité du substituant réactif (a) sur une surface unitaire de l'au moins une parmi la particule en forme de plaque (b1) ayant un facteur de forme de 2 ou plus et la particule en forme d'aiguille (b2) ayant un facteur de forme de 2 ou plus n'est pas inférieure à 0,2 x $10^{-6}$ mol/m$^2$ et pas supérieure à 1,4 x $10^{-4}$ mol/m$^2$.

12. Procédé de production du film de polyester selon la revendication 10 ou 11, dans lequel l'au moins une parmi la particule en forme de plaque (b1) ayant un facteur de forme de 2 ou plus et la particule en forme d'aiguille (b2) ayant un facteur de forme de 2 ou plus a été traitée avec un agent de traitement de surface contenant le substituant réactif (a), et la proportion (en masse) de l'agent de traitement de surface n'est pas inférieure à 0,1 partie en masse et pas supérieure à 5 parties en masse par rapport à la masse de la particule (B) étant définie comme étant 100 parties en masse.

13. Procédé de production du film de polyester selon l'une quelconque des revendications 10 à 12, dans lequel l'étape de malaxage à l'état fondu produit une composition de type copeaux, puis la composition de type copeaux est soumise à une polymérisation en phase solide, puis le produit résultant est fondu et soumis à une formation de film dans l'étape d'extrusion à l'état fondu.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008080672 A
- JP 2013028753 A
- JP 2013038179 A
- JP 2003041019 A
- EP 1199333 A1

**Non-patent literature cited in the description**

- Filler Handbook. 1987